# EUROPEAN PATENT SPECIFICATION

(11) **EP 4 432 637 B1**
(45) Date of publication and mention of the grant of the patent: **18.03.2026**
(21) Application number: 24704675.8
(22) Date of filing: 25.01.2024
(51) Int. Cl.: G06F 1/20, G06F 1/16, H04M 1/02, G09G 5/00

(54) **ELECTRONIC DEVICE COMPRISING FRAME, AND FRAME MANUFACTURING METHOD**
ELEKTRONISCHE VORRICHTUNG MIT RAHMEN UND RAHMENHERSTELLUNGSVERFAHREN
DISPOSITIF ÉLECTRONIQUE COMPRENANT UNE TRAME, ET PROCÉDÉ DE FABRICATION DE TRAME

(30) Priority: 25.01.2023 KR 20230009498; 21.02.2023 KR 20230023064
(43) Date of publication of application: 18.09.2024
(73) Proprietor: Samsung Electronics Co., Ltd., Suwon-si, Gyeonggi-do 16677 (KR)
(72) Inventor: AHN, Joseph, Suwon-si, Gyeonggi-do 16677 (KR); LEE, Youngchul, Suwon-si, Gyeonggi-do 16677 (KR); KIM, Taehyeong, Suwon-si, Gyeonggi-do 16677 (KR)
(74) Representative: HGF
(86) International application number: PCT/KR2024/001225
(87) International publication number: WO 2024/158234

(56) References cited:
- CN-U- 212 851 549
- JP-A- 2017 188 601
- KR-A- 20220 064 139
- KR-A- 20220 114 902
- KR-B1- 101 926 470
- US-A1- 2020 337 184
- US-A1- 2020 389 999
- US-A1- 2021 274 637
- US-A1- 2022 394 870

## Description

### [Technical Field]

Embodiments of the disclosure relate to an electronic device including a frame and a method of manufacturing the frame.

### [Background Art]

An electronic device may include a frame to support components.

The above-mentioned information may be provided as a related art for the purpose of helping understanding of the disclosure. No claim or determination is made as to whether any of the foregoing may be applied as a prior art related to the disclosure.

US 2020337184A1 discloses, according to its abstract, an electronic device including a housing and a support component joined to the housing. The support component can include a thermal conduction layer defining a first surface and a second surface opposite the first surface. The support component can also include a first support layer overlying the first surface and a second support layer overlying the second surface. A ratio of the thickness of the thermal conduction layer to the combined thickness of the first support layer and the second support layer can be at least 1.5.

### [Disclosure of Invention]

### [Technical Problem]

Due to slimming, i.e. reducing a thickness, of electronic devices, there may be a limitation or difficulties in disposing a heat radiation member such as a vapor chamber or a heat pipe to smoothly diffuse or dissipate heat emitted from at least one component.

Embodiments of the disclosure provide an electronic device including a frame having heat radiation performance, and a method of manufacturing the frame. Various examples of the disclosure are provided to address or at least mitigate the above-mentioned issue.

The technical subjects pursued in the disclosure may not be limited to the above mentioned technical subjects, and other technical subjects which are not mentioned may be clearly understood, through the following descriptions, by those skilled in the art to which the disclosure pertains.

### [Solution to Problem]

The scope of the present invention is determined according to the independent claim. Various embodiments of the present invention are outlined in the dependent claims.

Also disclosed herein is an electronic device including a front plate, a rear plate, a side, a support portion, and at least one electronic component. The front plate provides at least a portion of the front of the electronic device. The rear plate provides at least a portion of the rear surface of the electronic device. The side provides at least a portion of the side surface of the electronic device. The support portion is located between the front plate and the rear plate and is connected to the side. The at least one electronic component is located between the front plate and the rear plate. The support portion includes a clad metal. Heat emitted from the at least one electronic component is transferred to the clad metal.

In a disclosure, the clad metal comprises a first metal and a second metal arranged on the first metal. An opening is formed in the second metal. The at least one electronic component is in direct or indirect contact with the first metal through the opening.

In a disclosure, the first metal has a higher thermal conductivity than the second metal.

In a disclosure, at least one heat conductor is disposed between the at least one electronic component and the first metal such that the at least one electronic component is in indirect contact with the first metal through the opening. The at least one heat conductor has a higher thermal conductivity than the second metal.

In a disclosure, the at least one heat conductor is at least partly disposed in the opening of the second metal.

In a disclosure, the second metal has greater strength than the first metal.

In a disclosure, the first metal comprises copper, and the second metal comprises stainless steel.

In a disclosure, the clad metal further comprises a third metal arranged on the first metal. The first metal is at least partially disposed between the second metal and the third metal.

In a disclosure, the first metal has a higher thermal conductivity than the second metal and the third metal, and/or the second metal and the third metal have greater strength than the first metal.

In a disclosure, the side comprises a plurality of holes, and the clad metal comprises a plurality of protrusions inserted into the plurality of holes to connect the support portion to the side.

In a disclosure, the electronic device further comprise a printed circuit board on which the at least one electronic component is disposed, and an electromagnetic shield disposed on the printed circuit board to at least partially surround the at least one electronic component. The at least one electronic component is in direct or indirect contact with the clad metal through an opening in the electromagnetic shield.

In a disclosure, the electromagnetic shield is thermally connected to the clad metal.

In a disclosure, the electronic device further comprises a metal support portion extending from the side or connected to the side. The metal support portion is located between the front plate and the rear plate. A portion of the metal support portion is arranged over the clad metal. The portion of the metal support portion and the clad metal are coupled to each other through fusion.

In a disclosure, the side comprises an outer metal. The support portion comprises an inner metal comprising the clad metal. The outer metal and the inner metal are connected to each other through fusion.

In a disclosure, the at least one electronic component comprises a display module located between the support portion and the front plate and visually visible through the front plate.

### [Advantageous Effects of Invention]

An electronic device including a frame according to an embodiment of the disclosure can smoothly diffuse and/or dissipate heat emitted from at least one electronic component through a clad metal included in the frame.

Other effects obtainable or predicted from various embodiments of the disclosure will be suggested directly or implicitly by a detailed descriptions of the embodiments of the disclosure.

### [Brief Description of Drawings]

The above and other aspects, features, and advantages of specific embodiments of the disclosure will become more apparent from the following detailed description taken in conjunction with the accompanying drawings.
FIG. 1 is a view illustrating figures of an electronic device according to an embodiment of the disclosure.
FIGS. 2 and 3 are exploded perspective views of the electronic device according to an embodiment of the disclosure.
FIGS. 4 and 5 are views illustrating a frame according to an embodiment of the disclosure.
FIG. 6 is a cross-sectional view illustrating an inner metal, a first board assembly, and a heat conductor according to an embodiment of the disclosure.
FIG. 7 is a cross-sectional view illustrating an inner metal, a first board assembly, a first heat conductor, and a second heat conductor according to an embodiment of the disclosure.
FIG. 8 is a perspective view illustrating the portion indicated by reference numeral "216" in FIG. 2, according to an embodiment of the disclosure.
FIG. 9 is a view illustrating a figure illustrating a frame according to an embodiment of the disclosure and a figure illustrating a cross-sectional view of the frame taken along line E-E'.
FIG. 10 is a view illustrating a frame according to an embodiment of the disclosure.
FIG. 11 is a cross-sectional view of the electronic device according to an embodiment of the disclosure taken along line F-F' in FIG. 10.
FIG. 12 is a cross-sectional view illustrating a second metal and a metal support portion according to an embodiment of the disclosure.
FIG. 13 is a manufacturing flowchart of a frame according to an embodiment of the disclosure.
FIG. 14 is a perspective view illustrating a first base metal according to an embodiment of the disclosure.
FIG. 15 is a view illustrating the first base metal according to an embodiment of the disclosure.
FIG. 16 is a perspective view illustrating a second base metal according to an embodiment of the disclosure.
FIG. 17 is a view illustrating a combination of the first base metal and the second base metal according to an embodiment of the disclosure.
FIG. 18 is a perspective view of a combination of a base metal assembly and a base non-metal according to an embodiment of the disclosure.

### [Mode for the Invention]

Hereinafter, various embodiments of the disclosure will be described in detail with reference to the accompanying drawings.

Various embodiments of the disclosure and the terms used therein are not intended to limit the technological features set forth herein to particular embodiments. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B,", "A and/or B", "at least one of A and B," "at least one of A or B ," "A, B, or C," "at least one of A, B, and C," "A, B and/or C", and "at least one of A, B, or C" may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

The term "module" may be a minimum unit of a single integrated component adapted to perform one or more functions, or a part thereof.

Each element (e.g., a module or a program) of the above-described elements may include a single entity or multiple entities, and some of the multiple entities may be separately disposed in any other element. According to various embodiments, one or more of the above-described elements may be omitted, or one or more other elements may be added. Alternatively or additionally, a plurality of elements (e.g., modules) may be integrated into a single element. In such a case, according to various embodiments, the integrated element may still perform one or more functions of each of the plurality of elements in the same or similar manner as they are performed by a corresponding one of the plurality of elements before the integration.

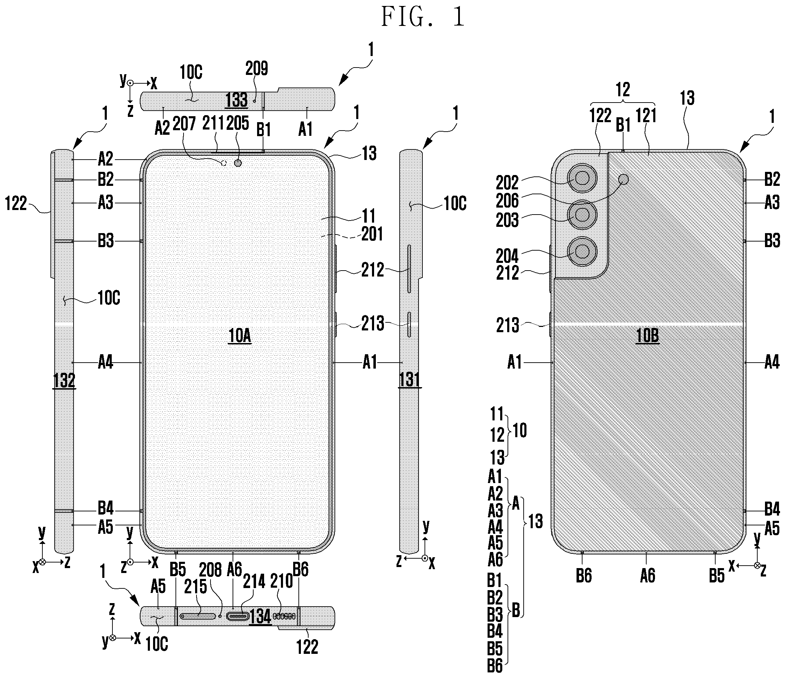

FIG. 1 illustrates views illustrating an electronic device 1 according to an embodiment of the disclosure.

In various embodiments of the disclosure, for convenience of explanation, the direction in which the front surface 10A of the electronic device 1 or a display area included in the front surface is oriented is defined as the +z-axis direction, and the direction in which the rear surface 10B of the electronic device 10B is defined as the -z-axis direction.

Referring to FIG. 1, the electronic device 1 may include a housing 10 that provides (or forms) at least a portion of the appearance of the electronic device 1. The housing 10 may provide, for example, the front surface 10A of the electronic device 1, the rear surface 10B of the electronic device 1, and a side surface 10C of the electronic device 1. In various embodiments, the housing 10 may refer to a structure that provides at least a portion of the front surface 10A, the rear surface 10B, and the side surface 10C.

According to an embodiment, the housing 10 includes a front plate (or a front cover, a first cover, or a first plate) 11, a rear plate (or a rear cover, a second cover, or a second plate) 12, and/or a side (or a side surface portion, a side surface member, a side surface bezel structure, or a side wall portion) 13.

According to an embodiment, the front plate 11 provides (or defines, or is associated with) at least a portion of the front surface 10A of the electronic device 1. At least a portion of the front plate 11 may be substantially transparent. The front plate 11 may include, for example, a glass plate including various coating layers, or a polymer plate.

According to an embodiment, the rear plate 12 provides (or defines, or is associated with) at least a portion of the rear surface 10B of the electronic device 1. The rear plate 12 may be substantially opaque. The rear plate 12 may be made of, for example, coated or colored glass, ceramic, polymer, metal (e.g., aluminum, stainless steel, or magnesium), or a combination of two or more of these materials.

According to an embodiment, the side 13 provides (or defines, or is associated with) at least a portion of the side surface 10C of the electronic device 1. The side 13 may include a metallic material and/or a non-metallic material (e.g., polymer).

According to an embodiment, the side 13 includes a first side (or, a first side surface portion, a first side wall, a first side wall portion, a first bezel, or a first bezel portion) 131, a second side (or, a second side surface portion, a second side wall, a second side wall portion, a second bezel, or a second bezel portion) 132, a third side (or a third side surface portion, a third side wall, a third side wall portion, a third bezel, or a third bezel portion) 133, and/or a fourth side (or, a fourth side surface portion, a fourth side wall, a fourth side wall portion, a fourth bezel, or a fourth bezel portion) 134.

According to an embodiment, when viewed from above the front plate 11 (e.g., when viewed in the -z-axis direction), the first side 131 is located to be spaced apart from the second side 132 in a first direction (e.g., the +x-axis direction) and may be substantially parallel to the second side 132. The first side 131 may provide a first side surface corresponding to the first direction in the side surface 10C of the electronic device 1. The second side 132 may provide a second side surface corresponding to a second direction (e.g., the -x-axis direction) opposite to the first direction in the side surface 10C of the electronic device 1.

According to an embodiment, the third side 133 interconnects one end portion of the first side 131 and one end portion of the second side 132. The fourth side 134 may interconnect the other end portion of the first side 131 and the other end portion of the second side 132. When viewed from above the front plate 11, the third side 133 may be located to be spaced apart from the fourth side 134 in a third direction (e.g., the +y-axis direction), and may be substantially parallel to the fourth side 134. The third side 133 may provide a third side surface corresponding to the third direction in the side surface 10C of the electronic device 1. The fourth side 134 may provide a fourth side surface corresponding to a fourth direction (e.g., the -y-axis direction) opposite to the third direction in the side surface 10C of the electronic device 1.

According to an embodiment, a first corner where the first side 131 and the third side 133 are connected, a second corner where the first side 131 and the fourth side 134 are connected, a third corner where a second side 132 and the third side 133 are connected, and/or a fourth corner where the second side 132 and the fourth side 134 are connected are implemented in a smoothly curved shape.

According to an embodiment, the side 13 includes an outer metal (or an outer metal structure, an outer conductor, an outer conductive structure, a side surface metal, a side surface metal structure, a side surface conductor, or a side surface conductive structure) A and an outer non-metal (or an outer non-metal structure, an outer non-conductor, an outer non-conductive structure, a side surface non-metal, a side surface non-metal structure, a side surface non-conductor, or a side surface non-conductive structure) B.

According to an embodiment, the outer metal A of the side 13 includes a first outer metal (or a first outer conductive portion or a first side surface conductive portion) A1, a second outer metal (or a second outer conductive portion or a second side surface conductive portion) A2, a third outer metal (or a third outer conductive portion or a third side surface conductive portion) A3, a fourth outer metal (or a fourth outer conductive portion or a fourth side surface conductive portion) A4, a fifth outer metal (or a fifth outer conductive portion or a fifth side surface conductive portion) A5, and/or a sixth outer metal (or a sixth outer conductive portion or a sixth side surface conductive portion) A6.

According to an embodiment, the outer non-metal B of the side 13 includes a first outer non-metal (or a first outer non-conductive portion or a first side surface non-conductive portion) B1, a second outer non-metal (or a second outer non-conductive portion or a second side surface non-conductive portion) B2, a third outer non-metal (or a third outer non-conductive portion or a third side surface non-conductive portion) B3, a fourth outer non-metal (or a fourth outer non-conductive portion or a fourth side surface non-conductive portion) B4, a fifth outer non-metal (or a fifth outer non-conductive portion or a fifth side surface non-conductive portion) B5, and/or a sixth outer non-metal (or a sixth outer non-conductive portion or a sixth side surface non-conductive portion) B6.

According to an embodiment, a combination of the first outer metal A1, the second outer metal A2, the third outer metal A3, the fourth outer metal A4, the fifth outer metal A5, and the sixth outer metal A6, the first outer non-metal B 1, the second outer non-metal B2, the third outer non-metal B3, the fourth outer non-metal B4, the fifth outer non-metal B5, and the sixth outer non-metal B6 provides the first side 131, the second side 132, the third side 133, and the fourth side 134.

According to an embodiment, the first outer non-metal B1 is disposed in a first split portion (e.g., a first gap) between the first outer metal A1 and the second outer metal (A2). The first outer metal A1 and the second outer metal A2 may be physically separated from each other with the first outer non-metal B1 interposed therebetween. The first outer non-metal B1 may be defined or interpreted as a "first insulating portion". The second outer non-metal B2 may be disposed in a second split portion (e.g., a second gap) between the second outer metal A2 and the third outer metal A3. The second outer metal A2 and the third outer metal A3 may be physically separated from each other with the second outer non-metal B2 interposed therebetween. The second outer non-metal B2 may be defined or interpreted as a "second insulating portion". The third outer non-metal B3 may be disposed in a third split portion (e.g., a third gap) between the third outer metal A3 and the fourth outer metal A4. The third outer metal A3 and the fourth outer metal A4 may be physically separated from each other with the third outer non-metal B3 interposed therebetween. The third outer non-metal B3 may be defined or interpreted as a "third insulating portion". The fourth outer non-metal B4 may be disposed in a fourth split portion (e.g., a fourth gap) between the fourth outer metal A4 and the fifth outer metal A5. The fourth outer metal A4 and the fifth outer metal A5 may be physically separated from each other with the fourth outer non-metal B4 interposed therebetween. The fourth outer non-metal B4 may be defined or interpreted as a "fourth insulating portion". The fifth outer non-metal B5 may be disposed in a fifth split portion (e.g., a fifth gap) between the fifth outer metal A5 and the sixth outer metal A6. The fifth outer metal A5 and the sixth outer metal A6 may be physically separated from each other with the fifth outer non-metal B5 interposed therebetween. The fifth outer non-metal B5 may be defined or interpreted as a "fifth insulating portion". The sixth outer non-metal B6 may be disposed in a sixth split portion (e.g., a sixth gap) between the first outer metal A1 and the sixth outer metal A6. The first outer metal A1 and the sixth outer metal A6 may be physically separated from each other with the sixth outer non-metal B6 interposed therebetween. The sixth outer non-metal B6 may be defined or interpreted as a "sixth insulating portion".

According to an embodiment, the side surface 10C of the electronic device 1 includes a first surface areas (e.g., conductive surface areas) provided by the first outer metal A1, the second outer metal A2, the third outer metal A3, the fourth outer metal A4, the fifth outer metal A5, and the sixth outer metal A6, and second surface areas (e.g., non-conductive surface areas) provided by the first outer non-metal B1, the second outer non-metal B2, the third outer non-metal B3, the fourth outer non-metal B4, the fifth outer non-metal B5, and the sixth outer non-metal B6. The first surface areas and the second surface areas may be seamlessly connected without a substantial height difference.

According to various embodiments, the locations, number, or shapes of the split portions (e.g., gaps) between the outer metal A and the outer non-metal B vary (not illustrated separately) without being limited to the illustrated example. The shape of the outer metal A and/or the shape of the outer non-metal B may vary (not illustrated separately) without being limited to the illustrated examples.

According to an embodiment, the rear plate 12 includes a first rear plate 121 and a second rear plate 122 connected to the first rear plate 121. The first rear plate 121 may provide a partial surface area of the rear surface 10B of the electronic device 1, and the second rear plate 122 may provide another partial surface area of the rear surface 10B of the electronic device 1.

According to an embodiment, the partial surface area provided by the second rear plate 122 on the rear surface 10B of the electronic device 1 is higher than the other partial area provided by the first rear plate 121 on the rear surface 10B of the electronic device 1 in the direction where the rear surface 10B of the electronic device 1 is oriented (e.g., the -z-axis direction).

According to an embodiment, the periphery of the second rear plate 122 includes a first edge corresponding to the first rear plate 121 (or connected to the first rear plate 121), and a second edge corresponding to the side 13.

According to an embodiment, the second edge corresponding to the side 13 in the second rear plate 122 is provided to correspond to a portion extending from the first corner where the first side 131 and the third side 133 are connected, a portion extending from the first corner of the first side 131, and a portion extending from the first corner of the third side 133. The first corner, the portion extending from the first corner of the first side 131, and the portion extending from the first corner of the third side 133 may be provided to be higher in the direction where the rear surface 10B of the electronic device 1 is oriented (e.g., the -z-axis direction) than the other portion of the side 13 to correspond to the second edge of the second rear plate 122.

According to an embodiment, the second rear plate 122 is connected to the side 13.

According to an embodiment, an integrated or single structure (e.g., a single continuous structure or a complete structure) including the second rear plate 122 and the outer metal A of the side 13 is provided. The second rear plate 122 may be connected to the first outer metal A1 and may include substantially the same metallic material as the first outer metal A1.

According to various embodiments, a partial surface area provided by the first rear plate 121 on the rear surface 10B of the electronic device 1 and another partial surface provided by the second rear plate 122 on the rear surface 10B of the electronic device 1 is implemented such that there is substantially no height difference between the partial surface areas (not separately illustrated).

According to various embodiments, an integrated or single structure (e.g., a single continuous structure or a complete structure) is provided to replace the first rear plate 121 and the second rear plate 122.

According to an embodiment, the electronic device 1 includes a display module 201, a first camera module 202, a second camera module 203, a third camera module 204, a fourth camera module 205, a first light-emitting module 206, a second light-emitting module (not separately illustrated), a first sensor module 207, a second sensor module (not separately illustrated), a first sound input module (not separately illustrated), a second sound input module (not separately illustrated), a first sound output module (not separately illustrated), a second sound output module (not separately illustrate), a first key input module 212, a second key input module 213, a first connection terminal 214, and/or a second connection terminal (not separately illustrated). Although not separately illustrated, at least one of the above-mentioned components may be omitted from the electronic device 1 or other components may be additionally included.

According to an embodiment, the display area (or active area or screen area) of the display module 201, or at least a part thereof, is visually visible through the front plate 11.

According to an embodiment, the electronic device 1 is implemented so that the display area, which is visible through the front plate 11, is as large as possible or practical (e.g., a large screen or a full screen). The display module 201 may be provided to have, for example, a periphery that is substantially the same as that of the front plate 11.

According to an embodiment, the first camera module 202, the second camera module 203, the third camera module 204, and/or the fourth camera module 205 include one or more lenses, one or more image sensors, and/or an image signal processor (ISP).

According to an embodiment, the first camera module 202, the second camera module 203, and the third camera module 204 are provided to correspond to the rear surface 10B of the electronic device 1. The first camera module 202, the second camera module 203, or the third camera module 204 may be defined or interpreted as a "rear camera module".

According to an embodiment, the first camera module 202 is located to correspond to a first camera hole provided in the second rear plate 122 and is visually visible from the outside of the electronic device 1 through the first camera hole. The second camera module 203 is located to correspond to a second camera hole provided in the second rear plate 122 and is visually visible from the outside of the electronic device 1through the second camera hole. The third camera module 204 is located to correspond to a third camera hole provided in the second rear plate 122 and is visually visible from the outside of the electronic device 1 through the third camera hole. In some embodiments, the second rear plate 122 may be implemented to provide a first light-transmitting area replacing the first camera hole, a second light-transmitting area replacing the second camera hole, and/or a third light-transmitting area replacing the third camera hole. The second rear plate 122 may be referred to as a "camera decoration" or a "camera decoration unit".

According to an embodiment, when viewed from above of the rear surface 10B of the electronic device 1 (e.g., when viewed in the z-axis direction), the first camera module 202, the second camera module 203, and the third camera module 204 are arranged in a direction from the third side 133 toward the fourth side 134 (e.g., the -y-axis direction). When viewed from above the rear surface 10B of the electronic device 1, the first camera module 202 may be located to correspond to the first corner where the first side 131 and the third side 133 are connected, and the second camera module 203 may be located between the first camera module 202 and the third camera module 204.

According to various embodiments, the relative positions between the first camera module 202, the second camera module 203, and the third camera module 204, and the shape of the second rear plate 122 corresponding to the relative positions vary (not separately illustrated) without being limited to the illustrated example. The number of camera modules corresponding to the second rear plate 122 may vary (not separately illustrated) without being limited to the illustrated example.

According to various embodiments, the first camera module 202, the second camera module 203, and/or the third camera module 204 include a wide-angle camera module, a telephoto camera module, a color camera module, a monochrome camera, or an IR camera (e.g., a time-of-flight (TOF) camera or a structured light camera) module.

According to an embodiment, the first camera module 202, the second camera module 203, and the third camera module 204 have different properties (e.g., angles of view) or functions.

According to various embodiments, the first camera module 202, the second camera module 203, and/or the third camera module 204 provide different angles of view (or lenses with different angles of view). The electronic device 1 may selectively use the angle of view of the first camera module 202, the second camera module 203, and/or the third camera module 204 based on a user's selection regarding the angle of view.

According to an embodiment, the fourth camera module 205 is located inside the electronic device 1 to correspond to the front surface 10A of the electronic device 1. External light may pass through the front plate 11 and may reach the fourth camera module 205. The fourth camera module 205 may be defined or interpreted as a "front camera module".

According to an embodiment, the fourth camera module 205 is located closer to the third side 133 than the fourth side 134 when viewed from above the front surface 10A of the electronic device 1 (e.g., when viewed in the -z axis direction). When viewed from above the front 10A of the electronic device 1, the separation distance of the fourth camera module 205 from the first side 131 and the separation distance of the fourth camera module 205 from the second side 132 may be substantially the same.

According to an embodiment, the fourth camera module 205 is located to be aligned with an opening provided in the display area of the display module 201 or may be at least partially inserted into the opening. External light may reach the fourth camera module 205 through the front plate 11 and the opening in the display area. The opening of the display area aligned with or overlapping the fourth camera module 205 may be provided in the form of a hole. In various embodiments, when viewed from above on the front surface 10A of the electronic device 1, the opening of the display area aligned with or overlapping the fourth camera module 205 may be provided as a notch (not separately illustrated).

According to various embodiments, the fourth camera module 205 overlaps the display area of the display module 201 when viewed from above on the front surface 10A of the electronic device 1. The fourth camera module 205 may be located on the rear surface of the display area or below or beneath the display area. When viewed from the outside of the electronic device 1, the fourth camera module 205 or the position of the fourth camera module 205 may not be substantially visually distinguished (or may be invisible). The fourth camera module 205 may include, for example, a hidden behind-display camera (e.g., an under-display camera (UDC)). External light may pass through the front plate 11 and the display area to reach the fourth camera module 205.

According to various embodiments, the fourth camera module 205 is located to be aligned with a recess (not separately illustrated) provided in the rear surface of the display area or may be at least partially inserted into the recess. When viewed from the outside of the electronic device 1, the fourth camera module 205 or the position of the fourth camera module 205 may be substantially visually invisible or may not be visually distinguished.

According to various embodiments, although not separately illustrated, a partial area of the display module 201 that at least partially overlaps the fourth camera module 205 includes a pixel structure and/or a wiring structure that is different from other partial areas. The pixel structure and/or the wiring structure provided in the partial area of the display area that at least partially overlaps the fourth camera module 205 may be implemented to reduce light loss between the outside of the electronic device 1 and the fourth camera module 205. The partial area of the display area that at least partially overlaps the fourth camera module 205 may have, for example, a pixel density (e.g., number of pixels per unit area) that is different from other partial areas. For example, the partial area of the display area that at least partially overlaps the fourth camera module 205 may not substantially include a plurality of pixels.

According to an embodiment, the first light-emitting module 206 is provided to correspond to the rear surface 10B of the electronic device 1. The first light-emitting module 206 may include a light source for the first camera module 202, the second camera module 203, and/or the third camera module 204. The first light-emitting module 206 may include, but is not limited to, an LED, an IR LED, or a xenon lamp.

According to an embodiment, the first light-emitting module 206 is located to correspond to the flash hole (or light transmission area) provided in the first rear plate 121.

According to various embodiment, the first light-emitting module 206 is located to correspond to the flash hole (or light transmission area) provided in the first rear plate 122.

According to an embodiment, a second light-emitting module (e.g., an LED, an IR LED, or a xenon lamp) (not separately illustrated) is provided to correspond to the front surface 10A of the electronic device 1. The second light-emitting module may provide status information of the electronic device 1 in the form of light. In various embodiments, the second light-emitting module may provide a light source that operates in conjunction with the operation of the first camera module 205.

According to an embodiment, the first sensor module 207 is located inside the electronic device 1 to correspond to the front surface 10A of the electronic device 1. The first sensor module 207 may include, for example, an optical sensor (e.g., a proximity sensor or an illuminance sensor). The position of first terminal units 207 may vary without being limited to the illustrated example.

According to an embodiment, the first sensor module 207 overlaps the display area of the display module 201 when viewed from above the front surface 10A of the electronic device 1. The first camera module 207 may be located on the rear surface of the display area or below or beneath the display area. When viewed from the outside of the electronic device 1, the first sensor module 207 or the position of the first sensor module 207 may be substantially visually invisible or may not be visually distinguished. External light may pass through the front plate 11 and the display area to reach the first sensor module 207.

According to various embodiments, the first sensor module 207 is located to be aligned with a recess (not separately illustrated) provided in the rear surface of the display area or may be at least partially inserted into the recess. When viewed from the outside of the electronic device 1, the first sensor module 207 or the position of the first sensor module 207 may be substantially visually invisible or may not be visually distinguished.

According to various embodiments, although not separately illustrated, a partial area of the display area of the display module 201 that at least partially overlaps the first sensor module 207 includes a pixel structure and/or a wiring structure that is different from other partial areas. The pixel structure and/or the wiring structure provided in the partial area of the display area that at least partially overlaps the first camera module 207 may be implemented to reduce light loss between the outside of the electronic device 1 and the first camera module 207. For example, the partial area of the display area that at least partially overlaps the first camera module 207 may have a pixel density (e.g., number of pixels per unit area) that is different from other partial areas. For example, the partial area of the display area that at least partially overlaps the first sensor module 207 may not substantially include a plurality of pixels.

According to various embodiments, the first sensor module 207 is located to be aligned with an opening provided in the display area of the display module 201 or may be at least partially inserted into the opening. External light may pass through the front plate 11 and the opening in the display area to reach the first sensor module 207. The opening of the display area aligned with or overlapping the first sensor module 207 may be provided in the form of a hole. In various embodiments, when viewed from above on the front surface 10A of the electronic device 1, the opening of the display area aligned with or overlapping the first sensor module 207 may be provided as a notch (not separately illustrated).

According to various embodiments, the second sensor module (not separately illustrated) includes an optical, electrostatic, or ultrasonic biometric sensor (e.g., a fingerprint sensor). The second sensor module may be disposed in the electronic device 1 in a manner that is at least partially the same as or similar to the first sensor module 207. The electronic device 1 may further include one or more third sensor modules (not separately illustrated) provided at various other positions.

According to an embodiment, the first sound input module (not separately illustrated) includes a first microphone. The second sound input module (not separately illustrated) may include a second microphone. The first microphone may be located inside the electronic device 1 to correspond to, for example, the first microphone hole 208 provided in the fourth side 134. The second microphone may be located inside the electronic device 1 to correspond to, for example, the second microphone hole 209 provided in the third side 133. The positions or number of microphones and microphone holes 208 or 209 corresponding to the microphones may vary (not separately illustrated) without being limited to the illustrated example.

According to an embodiment, the first sound output module (not separately illustrated) includes a first speaker (not separately illustrated) used to reproduce data related to multimedia or recording. The first speaker may be located inside the electronic device 1 to correspond to, for example, the first speaker hole 210 provided in the fourth side 134. The positions or number of first sound output modules including the first speaker may vary (not separately illustrated).

According to an embodiment, the second sound output module (not separately illustrated) includes a second speaker (e.g., a receiver for a call) (not separately used) used for a call. The second speaker may be located inside the electronic device 1 to correspond to, for example, the second speaker hole 211 (e.g., an opening in the form of a through hole or a notch) provided in the front plate 11 or the third side 133 between the front plate 11 and the third side 133. The positions or number of second sound output modules including the second speaker may vary (not separately illustrated).

According to various embodiments, the first speaker includes a piezo speaker, in which case the first speaker hole 210 may be omitted.

According to various embodiments, the second speaker includes a piezo speaker, in which case the second speaker hole 211 may be omitted.

According to various embodiments, a first single hole (not separately illustrated) is provided (or defined) to replace the first microphone hole 208 and the first speaker hole 210.

According to various embodiments, a second single hole (not separately illustrated) is provided (or defined) to replace the second microphone hole 209 and the second speaker hole 211.

According to an embodiment, the first key input module 212 or the second key input module 213 include a key located in an opening in the first side 131 and a key signal generator (not separately illustrated) configured to generates a key signal in response to a press or touch on the key. The positions or number of key input modules 212 or 213 may vary (not separately illustrated) without being limited to the illustrated example.

According to an embodiment, the first connection terminal 214 is located inside the electronic device 1 to correspond to the first connection terminal hole provided in the fourth side 134. An external electronic device may be electrically connected to the electronic device 1 via the first connection terminal 214. The electronic device 1 may receive or transmit power and/or data from or to an external electronic device via the first connection terminal 214. The first connection terminal 214 may include, for example, a USB connector or an HDMI connector. The positions or number of first connection terminals 214 may vary (not separately illustrated) without being limited to the illustrated example.

According to an embodiment, the second connection terminal (not separately illustrated) is located inside the electronic device 1 to correspond to a second connector hole provided in the fourth side 134. A cover member 215 may be located in the second connector hole to cover the second connection terminal. An external storage medium such as a SIM card (or a universal SIM (USIM) card) or a memory card (e.g., a secure digital (SD) memory card) may be connected to the second connector. The positions or number of second connection terminals may vary without being limited to the illustrated example.

The electronic device 1 may further include various components depending on its provision form. Although it is impossible to list all of these components since the components are modified diversely depending on the convergence trend of an electronic device 1, components equivalent to the above-mentioned components may be further included the electronic device 1. In various embodiments, specific components may be excluded from the above components or replaced with other components depending on the provision form of the electronic device. It is to be understood at the present disclosure envisages and includes all combinations of the above-mentioned features and/or embodiments. That is, every combination of the above-described features should be considered as included in the present disclosure as a specific example.

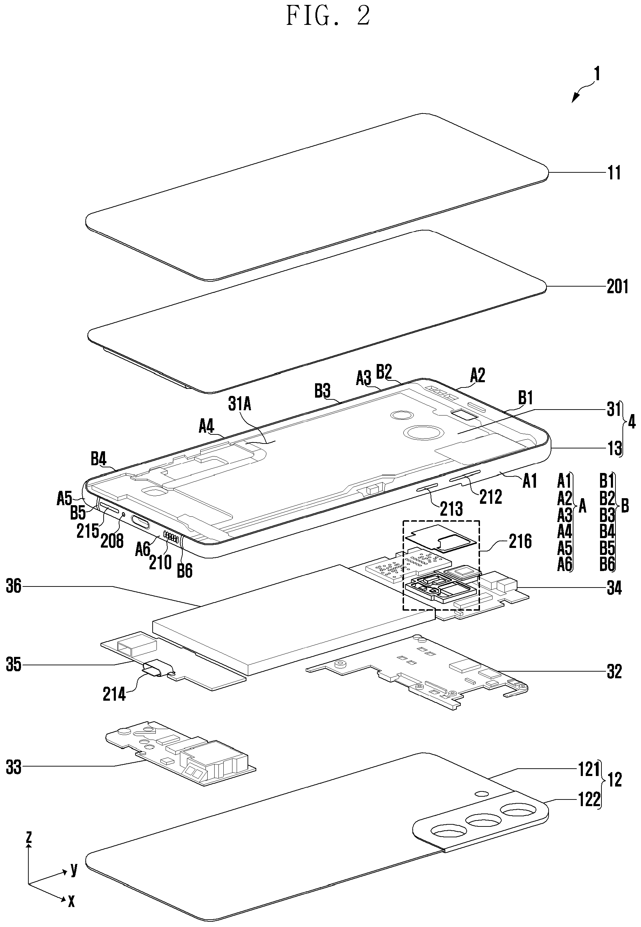

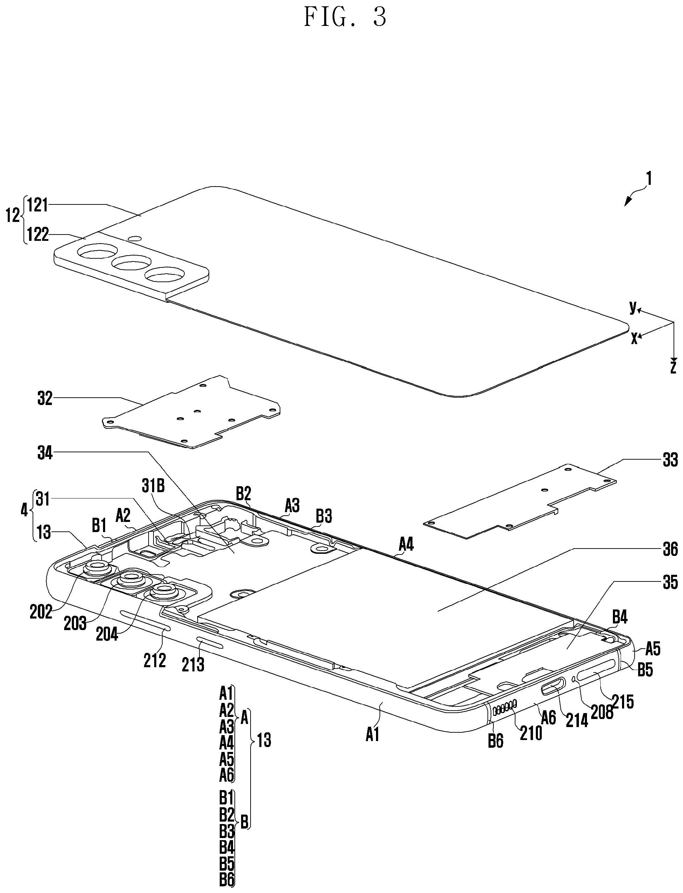

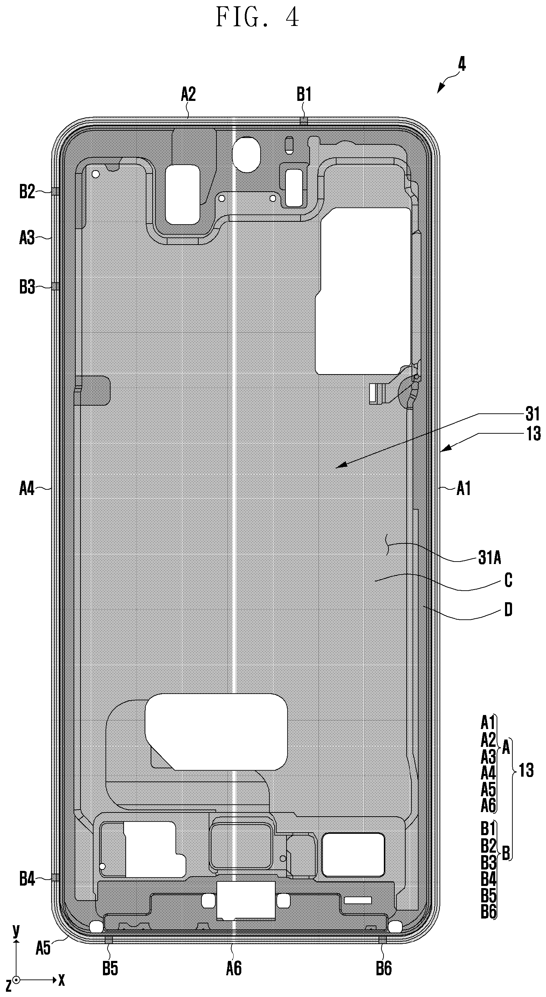

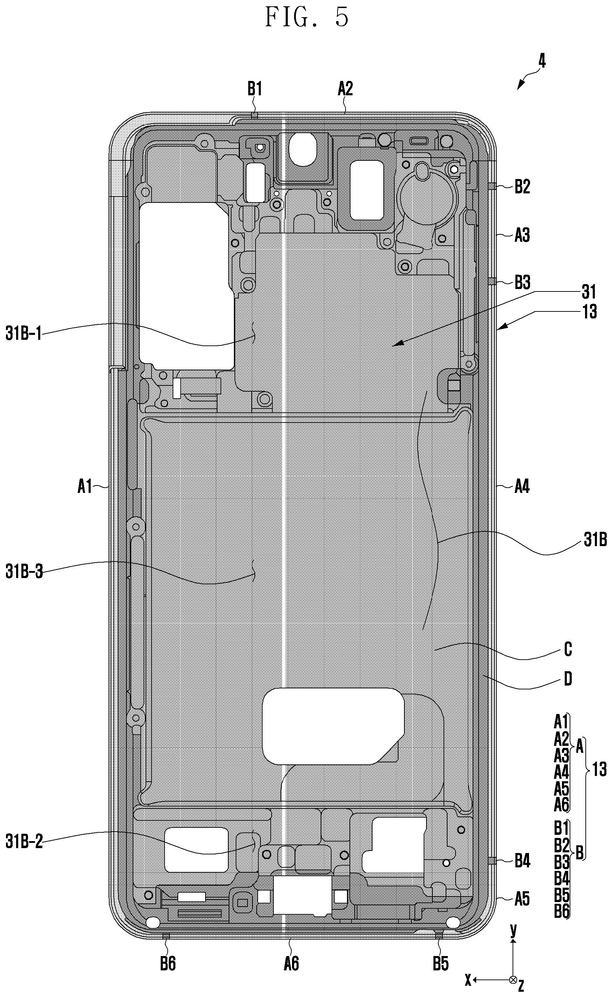

FIGS. 2 and 3 are exploded perspective views of an electronic device 1 according to an embodiment of the disclosure. FIGS. 4 and 5 are views illustrating a frame 4 according to an embodiment of the disclosure. It is to be understood at the present disclosure envisages and includes all combinations of features and/or embodiments disclosed in relation to FIGS. 2, 3, 4 and 5. That is, every combination of the features described below in relation to FIGS. 2, 3, 4 and 5 should be considered as included in the present disclosure as a specific example.

Referring to FIGS. 2, 3, 4, and 5, the electronic device 1 may include a front plate 11, a rear plate 12, a frame (or a frame structure or a framework) 4, a second support portion 32, a third support portion 33, a display module 201, a first board assembly 34, a second board assembly 35, and/or a battery 36. Although not separately illustrated, at least some of the above-mentioned components may be omitted from the electronic device 1 or other components may be additionally included in the electronic device 1.

According to an embodiment, the frame 4 includes a first support portion (or, a first support, a first support member, a first support structure, or a bracket) 31 and a side 13 connected to (or adjacent to, at least partially surrounding) the first support portion 31. The connection may be direct or indirect. The first support portion 31 may be at least partially located between the front plate 11 and the rear plate 12. The first support portion 31 may include a metallic material and/or a non-metallic material (e.g., polymer). The side 13 may be provided as a combination of an outer metal A and/or an outer non-metal B. A combination of the first support portion 31 and the side 13 (e.g., the frame 4) may be interpreted as a structural component on which electric components (or functional components) such as the display module 201, the first board assembly 34, the second board assembly 35, or the battery 36 and/or mechanical components (not separately illustrated) are arranged or supported.

According to various embodiments, the first support portion 31 is interpreted as a portion of the housing 10 (see FIG. 1).

According to an embodiment, the first support portion 31 includes a first support surface 31A corresponding to the front plate 11, and a second support surface 31B corresponding the rear plate 12 and provided opposite to the first support surface 31A (e.g. provided on an opposite side of the first support portion 31 to the first support surface 31A).

According to an embodiment, the electronic device 1 includes a first space (not separately illustrated) between the first support surface 31A and the front plate 11, and a second space (not separately illustrated) between the second support surface 31B and the rear plate 12. One or more components, such as the display module 201, may be disposed on or supported by the first support surface 31A in the first space. A plurality of components, such as a first camera module 202, a second camera module 203, a third camera module 204, the second support portion 32, the third support portion 33, the first board assembly 34, the second board assembly 35, and/or the battery 36, may be disposed on or supported by the second support surface 31B in the second space.

According to an embodiment, the first support surface 31A of the first support portion 31 provides a front surface seating portion on which one or more components are stably disposed or supported. The front surface seating portion may be provided by a combination of surface areas having different heights.

According to an embodiment, the second support surface 31B of the first support portion 31 provides a rear surface seating portion on which a plurality of components are stably disposed or supported. The rear surface seating portion may be provided by a combination of surface areas having different heights.

According to an embodiment, the first support portion 31 may be provided as a combination of an inner metal C and/or an inner non-metal D. The inner metal C may be provided as a combination of one or more conductive portions. The inner non-metal D may be provided as a combination of one or more non-conductive portions.

According to an embodiment, the first support surface 31A and/or the second support surface 31B of the first support portion 31 are provided as a combination of the inner metal C and the inner non-metal D. A partial surface area of the first support surface 31A or the second support surface 31B may include a conductive surface area provided by the inner metal C, and another partial surface area of the first support surface 31A or the second support surface 31B may include a non-conductive surface area provided by the inner non-metal D.

According to an embodiment, the inner metal C of the first support portion 31 is connected to the outer metal A of the side 13.

According to an embodiment, a first metallic material included in the inner metal C of the first support portion 31 is different from a second metallic material included in the outer metal A of the side 13.

According to various embodiments, the first metallic material included in the inner metal C of the first support portion 31 is the same as the second metallic material included in the outer metal A of the side 13.

According to an embodiment, an integrated or single metal (or metal structure) (e.g., a single continuous structure or a complete structure) including the inner metal C of the first support portion 31 and the outer metal A of the side 13 is provided. A portion of the integrated or single metal may be included in the first support portion 31, and another portion of the integrated or single metal may be included in the side 13.

According to an embodiment, the inner non-metal D of the first support portion 31 is at least partially connected to the outer non-metal B of the side 13.

According to an embodiment, the first non-metallic material included in the inner non-metal D of the first support portion 31 is the same as the second non-metallic material included in the outer non-metallic material B of the side 13.

According to various embodiments, the first non-metallic material included in the inner non-metal D of the first support portion 31 is different from the second non-metallic material included in the outer non-metallic material B of the side 13.

According to an embodiment, an integrated or single non-metal (or non-metal structure) (e.g., a single continuous structure or a complete structure) including the inner non-metal D of the first support portion 31 and the outer non-metal B of the side 13 is provided. A portion of the integrated or single non-metal may be included in the first support portion 31, and another portion of the integrated or single non-metal may be included in the side 13.

According to an embodiment, the display module 201 is located between the first support portion 31 and the front plate 11. The display module 201 may be disposed on (or coupled to) the front plate 11 and/or the first support portion 31 (or the first support surface 31A of the first support portion 31).

According to an embodiment, the display module 201 is bonded to the front plate 11 via an optically transparent adhesive member (or optically transparent adhesive material) such as optical clear adhesive (OCA), optical clear resin (OCR), or super view resin (SVR) (not separately illustrated).

According to an embodiment, the first board assembly 34, the second board assembly 35, and/or the battery 36 are located between the first support portion 31 and the rear plate 12. The first board assembly 34, the second board assembly 35, and/or the battery 36 may be disposed on (or coupled to) the first support portion 31 (or the second support surface 31B of the first support portion 31).

According to an embodiment, the first board assembly 34 and the second board assembly 35 are disposed to be spaced apart from each other with the battery 36 interposed therebetween when viewed from above the rear plate 12 (e.g., when viewed in the +z-axis direction).

According to an embodiment, when viewed from above the rear plate 12, the first board assembly 34 is at least partially located between the third side 133 (see FIG. 1) and the battery 36. When viewed from above the rear plate 12, the second board assembly 35 may be at least partially located between the fourth side 134 (see FIG. 1) and the battery 36.

According to an embodiment, the second support surface 31B of the first support portion 31 includes a first support area 31B-1 corresponding to the first board assembly 34, a second support area 31B-2 corresponding to the second board assembly 35, and/or a third support area 31B-3 corresponding to the battery 36. The first board assembly 34 may be disposed on or coupled to the first support area 31B-1. The first support area 31B-1 may include a first seating portion on which the first board assembly 34 is stably disposed or supported. The second board assembly 35 may be disposed on or coupled to the second support area 31B-2. The second support area 31B-2 may include a second seating portion on which the second board assembly 35 is stably disposed or supported. The battery 36 may be disposed on or coupled to the third support area 31B-3. The third support area 31B-3 may include a third seating portion on which the battery 36 is stably disposed or supported. The first seating portion, the second seating portion, and/or the third seating portion may be provided with a combination of surface areas having different heights. The third seating portion may include, for example, a recess into which the battery 36 may be inserted or fitted.

According to an embodiment, the first board assembly 34 includes at least one printed circuit board, electric components (not separately illustrated) disposed on or connected to the at least one printed circuit board, and/or mechanical elements (or structural elements) (not separately illustrated) disposed on or connected to the at least one printed circuit board.

According to an embodiment, the display module 201, the second microphone (not separately illustrated) corresponding to the second microphone hole 209 (see FIG. 1), the first camera module 202, the second camera module 203, the third camera module 204, the fourth camera module 205, the first light-emitting module 206 (see FIG. 1), the first sensor module 207 (see FIG. 1), the first key input module 212, the second key input module 213, and/or various other electric components are electrically connected to the first board assembly 34 via electrical paths such as a flexible printed circuit board.

According to an embodiment, the second board assembly 35 includes at least one printed circuit board, electric components (not separately illustrated) disposed on or connected to the at least one printed circuit board, and/or mechanical elements (or structural elements) (not separately illustrated) disposed on or connected to the at least one printed circuit board.

According to an embodiment, the first microphone (not separately illustrated) corresponding to the first microphone hole 208, the first speaker (not separately illustrated) corresponding to the first speaker hole 210, and the first connection terminal 214, the second connection terminal (not separately illustrated) corresponding to the cover member 215, and/or various other electronic components are electrically connected to the second board assembly 35 via electrical paths such as a flexible printed circuit board.

According to an embodiment, the first board assembly 34 and/or the second board assembly 35 are electrically connected via an electrical path (or electrical connection member) (not separately illustrated) such as a flexible printed circuit board.

According to various embodiments, although not separately illustrated, the printed circuit board included in the first board assembly 34 includes a protrusion (not separately illustrated) extending between the first side 131 (see FIG. 1) and the battery 36 or between the second side 132 (see FIG. 1) and the battery 36 when viewed from above the rear plate 12. The protrusion may be electrically connected to the second board assembly 35 via an electrical path such as a flexible printed circuit board.

According to various embodiments, an integrated or single printed circuit board (not separately illustrated) that replaces the printed circuit board included in the first board assembly 34 and the printed circuit board included in the second board assembly 35 is provided. The integrated or single printed circuit board may include, for example, a first board portion located between the third side 133 (see FIG. 1) and the battery 36 and a second board portion located between the fourth side 134 (see FIG. 1) and the battery 36 when viewed from above the rear plate 12, and may include a third board portion interconnecting the first board portion and the second board portion. The third board portion may be located between the first side 131 (see FIG. 1) and the battery 36, or between the second side 132 (see FIG. 1) and the battery 36 when viewed from above the rear plate 12. The third portion may be implemented substantially rigid or flexible.

According to various embodiments, although not separately illustrated, the first board assembly 34 or the second board assembly 35 includes a primary printed circuit board (or a main printed circuit board), a secondary printed circuit board (or a sub-printed circuit board), and/or an interposer board. When viewed from above the rear plate 12, the primary printed circuit board and the secondary printed circuit board may at least partially overlap each other. The interposer board may be disposed between the primary printed circuit board and the secondary printed circuit board, and may electrically interconnect the primary printed circuit board and the secondary printed circuit board.

According to an embodiment, the battery 36 is a device that supplies power to at least one component of the electronic device 1, and may include, for example, a non-rechargeable primary battery, a rechargeable secondary battery, or a fuel cell.

According to an embodiment, the outer metal A of the side 13 is electrically connected to a first ground structure (not separately illustrated) included in the first board assembly 34 via a flexible conductor (or a flexible conductive portion or a flexible conductive member) located between the outer metal A and the first board assembly 34. The flexible conductor may include, for example, a conductive clip (e.g., a conductive structure including an elastic structure), a pogo-pin, a spring, conductive Poron, conductive sponge, conductive rubber, conductive tape, or a conductive connector.

According to an embodiment, the first ground structure (not separately illustrated) of the first board assembly 34 includes a ground area included in at least one printed circuit board included in the first board assembly 34, and/or at least one conductor or a metal body electrically connected to the ground area.

According to an embodiment, the outer metal A of the side 13 is electrically connected to a second ground structure (not separately illustrated) included in the second board assembly 35 via a flexible conductor (or a flexible conductive portion or a flexible conductive member) (not separately illustrated) located between the outer metal A and the second board assembly 35.

According to an embodiment, the second ground structure (not separately illustrated) of the second board assembly 35 includes a ground area included in at least one printed circuit board included in the second board assembly 35, and/or at least one conductor or a metal body electrically connected to the ground area.

According to an embodiment, the inner metal C of the first support portion 31 is electrically connected to a first ground structure (not separately illustrated) included in the first board assembly 34 via a flexible conductor (or a flexible conductive portion or a flexible conductive member) (not separately illustrated) located between the inner metal C and the first board assembly 34.

According to an embodiment, the inner metal C of the first support portion 31 is electrically connected to a second ground structure (not separately illustrated) included in the second board assembly 35 via a flexible conductor (or a flexible conductive portion or a flexible conductive member) (not separately illustrated) located between the inner metal C and the second board assembly 35.

According to an embodiment, the first ground structure (not separately illustrated) of the first board assembly 34 and/or the second ground structure (not separately illustrated) of the second board assembly 35 are electrically connected to each other via an electrical connection member (e.g., a flexible printed circuit board) (not separately illustrated) which electrically interconnects the first board assembly 34 and the second board assembly 35.

According to an embodiment, the combination of the outer metal A of the side 13 and the inner metal C of the first support portion 31 is defined or interpreted as a "third ground structure" of the frame 4.

According to an embodiment, the display module 201 is electrically connected to the inner metal C via a conductive member (not separately illustrated) located between the display module 201 and the inner metal C of the first support portion 31. For example, at least one conductive layer (e.g., a metal sheet for electromagnetic shielding such as a copper sheet) (not separately illustrated) included in the display module 201 may be electrically connected to the inner metal C via a conductive member (not separately illustrated) located between the inner metals C of the at least one conductive layer and the at least one conductive layer. The conductive member may include, for example, a conductive adhesive material (or a conductive bonding material). The conductive member may include, for example, a flexible conductor (or a flexible conductive portion or a flexible conductive member).

According to an embodiment, the at least one conductive layer (e.g., a metal sheet for electromagnetic shielding such as a copper sheet) (not illustrated separately) electrically connected to the inner metal C of the first support portion 31 of the display module 201 is defined or interpreted as a "fourth ground structure".

According to an embodiment, a combination of the first ground structure of the first board assembly 34, the second ground structure of the second board assembly 35, the third ground structure of the frame 4, and/or the fourth ground structure of the display module 201 is defined or interpreted as a "ground structure (or a ground)" of the electronic device 1. The ground structure of the electronic device 1 may further include various other ground structures (e.g., conductors or metal bodies) (not separately illustrated) electrically connected to the first ground structure of the first board assembly 34, the second ground structure of the second board assembly 35, the third ground structure of the frame 4, and/or the fourth ground structure of the display module 201.

According to an embodiment, the ground structure of the electronic device 1 reduce or prevent electromagnetic interference (EMI) to electric components included in the electronic device 1. The ground structure of the electronic device 1 may reduce or prevent the electromagnetic influence of noise from outside the electronic device 1 on the electric components included in the electronic device 1. The ground structure of the electronic device 1 may reduce or prevent electromagnetic interference between the electric components included in the electronic device 1.

The electronic device 1 may include a first conductive area (not separately illustrated) and a second conductive area (not separately illustrated). The first conductive area and the second conductive area may be electrically connected to each other, or may be electrically and physically connected to each other. According to various embodiments of the disclosure, when the first conductive area is configured to substantially radiate electromagnetic waves, the first conductive area of the combination of the first conductive area and the second conductive area may be defined or interpreted as an antenna radiator, and the second conductive area of the combination of the first conductive area and the second conductive area may be defined or interpreted as a ground structure of the electronic device 1 that is distinct from the antenna radiator. According to various embodiments of the disclosure, when the first conductive area is configured to substantially radiate electromagnetic waves, the combination of the first conductive area and the second conductive area may be defined or interpreted as a ground structure of the electronic device 1, and the first conductive area may be defined or interpreted as an antenna radiator implemented through a portion of the ground structure of the electronic device 1. According to various embodiments of the disclosure, when the first conductive area is configured to substantially radiate electromagnetic waves, the second conductive area may be configured as an antenna ground that electromagnetically affects the first conductive area (e.g., an antenna radiator). The antenna ground may contribute to ensuring antenna radiation performance (or radio wave transmission/reception performance or communication performance) and/or coverage relative to the antenna radiator. The antenna ground may reduce electromagnetic interference (EMI) or signal loss relative to the antenna radiator.

According to an embodiment, at least one, or some, of the ground structures of the electronic device 1 (not separately illustrated) are configured as antenna radiators. At least one, or some, of the ground structures of the electronic device 1 may be electrically connected to a wireless communication circuit (or a wireless communication module) (not separately illustrated) included in the first board assembly 34 or the second board assembly 35. At least one, or some, of the ground structures of the electronic device 1 may receive (or may be fed with) electromagnetic signals (or radio signals, RF signals, or radiated current) from a wireless communication circuit and may operate as an antenna radiator (or a radiator, a radiating portion, or a resonator). For example, at least one, or some, of the ground structures of the electronic device 1 configured as antenna radiators may include at least a portion of the outer metal A included in the side 13. For example, at least one, or some, of the ground structures of the electronic device 1 configured as antenna radiators may include at least a portion of a conductive layer (e.g., a metal sheet for electromagnetic shielding such as a copper sheet) included in the display module 201 (not separately illustrated). At least one, or some, of the antenna radiators configured from the ground structures of the electronic device 1 may vary (not separately illustrated).

According to an embodiment, when at least a portion of the outer metal A included in the side 13 is configured to radiate electromagnetic waves, at least a portion of the outer metal A included in the side 13 is defined or interpreted to be excluded from the third ground structure of the frame 4 or the ground structures of the electronic device 1. Various other conductive portions (or conductive areas or conductive patterns) configured to radiate electromagnetic waves may be defined or interpreted to be excluded from the ground structures of the electronic device 1.

According to an embodiment, at least one, or some, of the ground structures (not separately illustrated) of the electronic device 1 may be configured as an antenna ground that has an electromagnetic influence on at least one antenna radiator.

According to an embodiment, a wireless communication circuit (or a wireless communication module) (not separately illustrated) of the electronic device 1 processes transmission signals or reception signals in at least one selected or predetermined frequency band via the at least one antenna radiator. The selected or predetermined frequency band may include, for example, at least one of a low band (LB) (about 600 MHz to about 1 GHz), a middle band (MB) (about 1 GHz to about 2.3 GHz), a high band (HB) (about 2.3 GHz to about 2.7 GHz), or an ultra-high band (UHB) (about 2.7 GHz to about 6 GHz). The predetermined frequency band may include various other frequency bands.

According to an embodiment, the second support portion (or a second support, a second support member, or a second support structure) 32 is located between the first support portion 31 and the rear plate 12. At least a portion of the first board assembly 34 may be located between the first support portion 31 and the second support portion 32. The second support portion 32 may cover and/or protect the first board assembly 34. The second support portion 32 may be coupled to the first support portion 31 and/or the first board assembly 34 through screw fastening or various other mechanical fastening methods.

According to an embodiment, the third support portion (or a third support, a third support member, or a third support structure) 33 is located between the first support portion 31 and the rear plate 12. At least a portion of the second board assembly 35 may be located between the first support portion 31 and the third support portion 33. The third support portion 33 may cover and/or protect the second board assembly 35. The third support portion 33 may be coupled to the first support portion 31 and/or the second board assembly 35 through screw fastening or various other mechanical fastening methods.

According to an embodiment, the third support portion 33 is at least partially located to be spaced apart from the second support portion 32 with the battery 36 therebetween when viewed from above the rear plate 12.

According to various embodiments, the second support portion 32 and/or the third support portion 33 are interpreted as a portion of the housing 10 (see FIG. 1).

According to an embodiment, the frame 4 is defined or interpreted as the "front case" of the electronic device 1, and the second support portion 32 and/or the third support portion 33 may be defined or interpreted as the "rear case" of the electronic device 1.

According to various embodiments, an integrated or single support (e.g., a single continuous structure or a complete structure) (not illustrated separately) replacing the second support portion 32 and the third support portion 33 is provided.

According to an embodiment, the second support portion 32 and/or the third support portion 33 includes a metallic material and/or a non-metallic material (e.g., polymer).

According to an embodiment, the second support portion 32 or the third support portion 33 includes at least one antenna radiator configured to radiate electromagnetic waves. For example, the second support portion 32 or the third support portion 33 may include a non-conductor (not separately illustrated) made of a non-metallic material, and at least one conductive pattern (not separately illustrated) disposed on the non-conductor. The at least one conductive pattern may be disposed on the non-conductor through, for example, laser direct structuring (LDS). The LDS may be a method of drawing a pattern on a non-conductive material by using a laser and plating a conductive material such as copper or nickel on the pattern to form a conductive pattern. The at least one conductive pattern included in the second support portion 32 or the third support portion 33 may receive (or may be fed with) electromagnetic signals (or radio signals, RF signals, or radiation current) from a wireless communication circuit (e.g., a wireless communication module) included in the first board assembly 34 or the second board assembly 35 and may operate as an antenna radiator (or a radiator, a radiating portion, or a resonator).

According to an embodiment, the electronic device 1 includes a heat radiation structure (not separately illustrated) for diffusing or dissipating heat emitted from one or more electric components (e.g., electronic components). The heat radiation structure may diffuse or dissipate heat such that heat emitted from one or more electric components does not remain in the one or more electric components. The heat radiation structure may reduce or prevent overheating of the one or more electric components, thereby reducing or preventing performance degradation or damage to the one or more electric components.

According to an embodiment, the heat radiation structure (not separately illustrated) of the electronic device 1 includes one or more heat conductors (or thermoelectric members) configured to receive heat emitted from one or more electric components, and/or a combination of the one or more heat conductors (or thermally conductive members). The one or more heat conductors may include, for example, a heat spreader and/or a heat sink.

In the disclosure, one or more heat conductors included in the heat radiation structure (not separately illustrated) of the electronic device 1 may be interpreted as good heat conductors (e.g., members including a metallic material). It may be interpreted that a bad heat conductor (e.g., gas or a member of a non-metallic material such as a polymer) is not included in the one or more heat conductors of the heat radiation structure.

According to an embodiment, the heat radiation structure of the electronic device 1 includes at least one, or some, of the ground structures of the electronic device 1.

According to various embodiments, the heat radiation structure of the electronic device 1 includes a vapor chamber (not separately illustrated) and/or a heat pipe (not separately illustrated).

According to an embodiment, the heat radiation structure of the electronic device 1 is defined or interpreted to include convective heat transfer, which is a method of transferring heat energy between a solid surface (e.g., the surfaces of one or more heat conductors) and a gas, between the one or more heat conductors and the surrounding air.

In the disclosure, heat conduction between a first component and a second component may include "direct heat conduction" or "indirect or mediate heat conduction". The direct heat conduction between a first component and a second component may be defined or interpreted as the transfer of heat between the first component and the second component through direct (or physical) contact between the first component and the second component. The indirect heat conduction between a first component and a second component may be defined or interpreted as the transfer of heat between the first component or the second component occurs through (or via) a third component (e.g., a medium or intermediate material) between the first component and the second component. The indirect heat conduction between the first component and the second component may include direct heat conduction between the first component and the third component, and direct heat conduction between the second component and the third component. In the scheme of indirect heat conduction, the third component may be interpreted as a good heat conductor capable of smoothly transferring heat between the first component and the second component. In the scheme of indirect heat conduction, the third component may not include a poor heat conductor.

In the disclosure, indirect heat conduction between a first component and a second component may be interpreted as heat transfer between the first component and the second component by "indirect or mediate contact" between the first component and the second component through the third component.

According to an embodiment, the inner metal C included in the first support portion 31 of the frame 4 includes a clad metal (not separately illustrated). The clad metal may be an integrated or single composite material in which a plurality of metals are stacked (or bonded). The clad metal may be manufactured through various methods such as welding, pressing, casting, extruding, or laser cladding of a plurality of metals. The clad metal may provide (or have) a combination (e.g., complexation) of properties of the plurality of metals. The plurality of metals may have various individual properties, such as electromagnetic properties, chemical properties, thermal properties, or mechanical properties.

According to an embodiment, at least one of the plurality of metals included in the clad metal of the inner metal C has strength capable of stably supporting electric components (or functional components) such as the display module 201, the first board assembly 34, the second board assembly 35, or the battery and/or mechanical elements (not separately illustrated) or strength for durability of the electronic device 1.

According to an embodiment, at least one of the plurality of metals included in the clad metal of the inner metal C has a thermal property of heat conduction capable of smoothly diffusing or dissipating heat emitted from the one or more electric components. At least one of the plurality of metals included in the clad metal of the inner metal C may substantially include a good heat conductor.

According to an embodiment, at least one of the plurality of metals included in the clad metal of the inner metal C conducts electricity smoothly or may have an electromagnetic characteristic such as electromagnetic shielding performance.

According to an embodiment, at least one of the plurality of metals included in the clad metal of the inner metal C has a chemical property of corrosion resistance.

According to an embodiment, at least one of the plurality of metals included in the clad metal of the inner metal C has other characteristics.

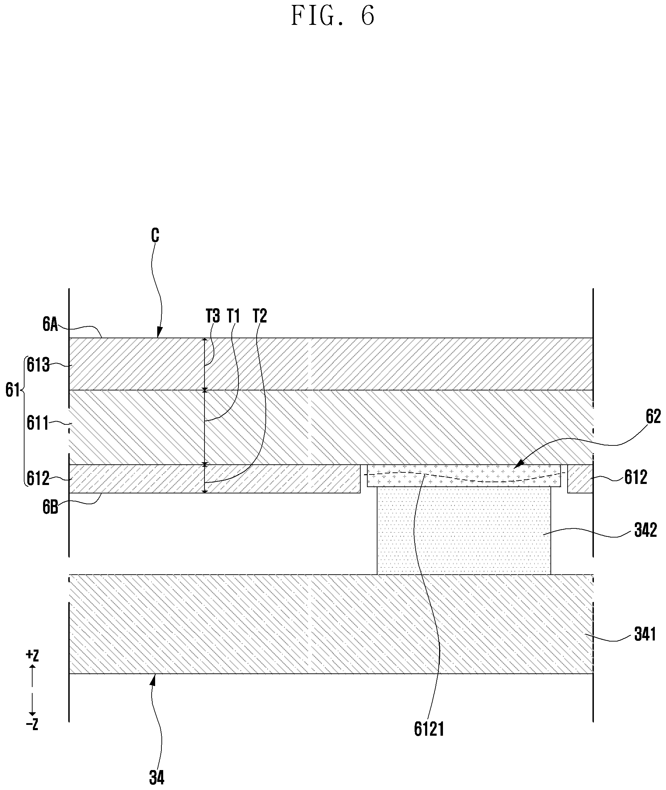

FIG. 6 is a cross-sectional view illustrating an inner metal C, a first board assembly 34, and a heat conductor 62 according to an embodiment of the disclosure.

Referring to FIG. 6, the inner metal C may include a clad metal 61.

According to an embodiment, the clad metal 61 may include a first metal 611, a second metal 612, and/or a third metal 613. The first metal 611 may include a first metal sheet, a first metal plate, a first metal board, or a first metal layer. The second metal 612 may include a second metal sheet, a second metal plate, a second metal board, or a second metal layer. The third metal 613 may include a third metal sheet, a third metal plate, a third metal board, or a third metal layer.

According to an embodiment, the first metal 611 is at least partially disposed (or located, formed, arranged) between the second metal 612 and the third metal 613.

According to an embodiment, the second metal 612 is at least partially located (or disposed, formed, arranged) between the first metal 611 and the rear plate 12 (see FIG. 2).

According to an embodiment, the second metal 612 provides (e.g. forms at least part of) a second conductive surface area 6B of the second support surface 31B of the first support portion 31 (see FIG. 5).

According to some embodiments, a non-conductive surface replacing the second conductive surface area 6B is disposed (or provided, arranged, formed) on the second metal 612, for example through a method such as coating or film attachment.

According to an embodiment, the third metal 613 is at least partially located (or disposed, formed, arranged) between the first metal 611 and the front plate 11 (see FIG. 2).

According to an embodiment, the third metal 613 provides (e.g. forms at least part of) a first conductive surface area 6A of the first support surface 31A of the first support portion 31 (see FIG. 4).

According to some embodiments, a non-conductive surface replacing the first conductive surface area 6A is disposed (or provided, arranged, formed) on the third metal 613, for example through a method such as coating or film attachment.

According to an embodiment, at least two metals among the first metal 611, the second metal 612, and the third metal 613 have at least one different property (electromagnetic property, chemical property, thermal property, and/or mechanical property).

According to an embodiment, the clad metal 61 provides (or has, exhibits, or includes) a combination (complexation) of at least one property of the first metal 611, at least one property of the second metal 612, and at least one property of the third metal 613.

According to an embodiment, a weak property of the first metal 611 compared to the second metal 612 and/or the third metal 613 may be compensated for by the second metal 612 and/or the third metal 613.

According to an embodiment, a weak property of the second metal 612 compared to the first metal 611 and/or the third metal 613 may be compensated for by the first metal 611 and/or the third metal 613.

According to an embodiment, a weak property of the third metal 613 compared to the first metal 611 and/or the second metal 612 may be compensated for by the first metal 611 and/or the second metal 612.

According to an embodiment, one of the first metal 611, the second metal 612, and the third metal 613 has greater strength than at least one remaining metal among the first metal 611, the second metal 612, and the third metal 613.

According to an embodiment, one of the first metal 611, the second metal 612, and the third metal 613 has a higher thermal conductivity than at least one remaining metal among the first metal 611, the second metal 612, and the third metal 613.

According to an embodiment, in the direction in which the front surface 10A (see FIG. 1) of the electronic device 1 is oriented (e.g., the +z-axis direction) or the direction in which the rear surface 10B (see FIG. 1) is oriented (e.g., the -z axis direction in FIG. 1), the first metal 611 has a first thickness T1, the second metal 612 may have a second thickness T2, and the third metal 613 may have a third thickness T3.

According to an embodiment, in at least one area of the clad metal 61, at least two of the first thickness T1, the second thickness T2, and the third thickness T3 are different from each other.

According to an embodiment, in at least one area of the clad metal 61, at least two of the first thickness T1, the second thickness T2, and the third thickness T3 are substantially the same as each other.

According to an embodiment, one partial surface area and another partial surface area of the first conductive surface area 6A provided by the third metal 613 are provided (e.g. formed or configured) with substantially no difference in height in the direction where the front surface 10A (see FIG. 1) of the electronic device 1 is oriented (e.g., the +z-axis direction).

According to an embodiment, one partial surface area and another partial surface area of the first conductive surface area 6A provided by the third metal 613 are provided (e.g. formed or configured) at different heights in the direction where the front surface 10A (see FIG. 1) of the electronic device 1 is oriented (e.g., the +z-axis direction).

According to an embodiment, one partial surface area and another partial surface area of the second conductive surface area 6B provided by the second metal 612 are provided (e.g. formed or configured) with substantially no difference in height in the direction where the rear surface 10B (see FIG. 1) of the electronic device 1 is oriented (e.g., the -z-axis direction).

According to an embodiment, one partial surface area and another partial surface area of the second conductive surface area 6B provided by the second metal 612 are provided (e.g. formed or configured) at different heights in the direction where the rear surface 10B (see FIG. 1) of the electronic device 1 is oriented (e.g., the -z-axis direction).

According to an embodiment, one partial area and another partial area of a first bonding portion or a first interface between the first metal 61 and the second metal 612 are provided (e.g. formed or configured) with substantially no difference in height in the direction where the rear surface 10B (see FIG. 1) of the electronic device 1 is oriented (e.g., the -z-axis direction).

According to an embodiment, one partial interface area and another partial interface area of a first bonding portion or a first interface between the first metal 61 and the second metal 612 are provided (e.g. formed or configured) at different heights in the direction where the rear surface 10B (see FIG. 1) of the electronic device 1 is oriented (e.g., the -z-axis direction).

According to an embodiment, one partial interface area and another partial interface area of a second bonding portion or a second interface between the first metal 61 and the third metal 613 are provided (e.g. formed or configured) with substantially no difference in height in the direction where the front surface 10A (see FIG. 1) of the electronic device 1 is oriented (e.g., the +z-axis direction).

According to an embodiment, one partial interface area and another partial interface area of a second bonding portion or a second interface between the first metal 611 and the third metal 613 are provided (e.g. formed or configured) at different heights in the direction where the front surface 10A (see FIG. 1) of the electronic device 1 is oriented (e.g., the +z-axis direction).

According to an embodiment, at least two of the first metal 611, the second metal 612, and the third metal 613 include different metallic materials. For example, the first metallic material included in the first metal 611 is different from the second metallic material included in the second metal 612 and/or the third metallic material included in the third metal 613. For example, the second metallic material included in the second metal 612 is different from the first metallic material included in the first metal 611 and/or the third metallic material included in the third metal 613. For example, the third metallic material included in the third metal 613 is different from the first metallic material included in the first metal 611 and/or the second metallic material included in the second metal 612.

According to an embodiment, two of the first metal 611, the second metal 612, and the third metal 613 include the same metallic material, and may include a metallic material different from that of the remaining one of the first metal 611, the second metal 612, and the third metal 613. For example, the second metal 612 and the third metal 613 include the same metallic material or include a different metallic material from the first metal 611.

According to an embodiment, the first metal 611 has a thermal conductivity property capable of more smoothly diffusing or dissipating heat than the second metal 612 and/or the third metal 613. The first metal 611 may be a good heat conductor. The first metal 611 may compensate for a weak thermal property of the second metal 612 and/or the third metal 613 compared to the first metal 611.

According to an embodiment, the first metal 611 more smoothly conducts electricity (e.g. provides greater conductivity or is more conductive) and/or has a better electromagnetic property in electromagnetic shielding performance (e.g., provides greater electromagnetic shielding, such as within a given frequency range, or allows for shielding in a more-specific frequency range) than the second metal 612 and/or the third metal 613. The first metal 611 may compensate for a weak electromagnetic property of the second metal 612 and/or the third metal 613 compared to the first metal 611.

According to an embodiment, the first metal 611 includes copper. The first metal 611 may include various other metallic materials, e.g. in addition to or instead of copper.

According to an embodiment, at least one of the second metal 612 and the third metal 613 has a better mechanical property for strength (e.g., greater hardness or toughness) than the first metal 611. The second metal 612 and/or the third metal 613 may compensate for a weak mechanical property of the first metal 611 compared to the second metal 612 and/or the third metal 613.

According to an embodiment, at least one of the second metal 612 and the third metal 613 includes stainless steel. The second metal 612 or the third metal 613 may include various other metallic materials, e.g. in addition to or instead of stainless steel.

According to various embodiments, although not separately illustrated, the clad metal 61 of the inner metal C is provided in a form including two metals (e.g., the first metal 611 and the second metal 612). Although not separately illustrated, the clad metal 61 may be provided in a form including four or more metals.

According to an embodiment, the first board assembly 34 includes a printed circuit board 341 and an electronic component 342 disposed on the printed circuit board 341.

According to an embodiment, the printed circuit board 341 is located between the first support portion 31 (see FIG. 2) and the rear plate 12 (see FIG. 2). The printed circuit board 341 may be disposed on (coupled to) the first support portion 31 (see FIG. 2).

According to an embodiment, at least a portion of the printed circuit board 341 is located between the inner metal C of the first support portion 31 (see FIG. 2) and the rear plate 12 (see FIG. 2).

According to an embodiment, the electronic component 342 is disposed on the printed circuit board 341 between the inner metal C and the printed circuit board 341.

According to an embodiment, heat emitted from the electronic component 342 is transferred to the clad metal 61 of the inner metal C. The clad metal 61 may diffuse or dissipate heat so that heat emitted from the electronic component 342 does not remain in the electronic component 342. The clad metal 61 may reduce or prevent overheating of the electronic component 342, thereby reducing or preventing performance degradation of the electronic device 342 or damage to the electronic component 342.

According to an embodiment, heat emitted from the electronic component 342 is transferred to the outer metal A (see FIGS. 4 and 5) via the clad metal 61 of the inner metal C.

According to an embodiment, heat emitted from the electronic component 342 is transferred to the clad metal 61 of the inner metal C through the scheme of indirect heat conduction. The electronic component 342 may be in indirect contact with the clad metal 61.

According to an embodiment, the heat conductor 62 is disposed between the electronic component 342 and the clad metal 61 of the inner metal C. Heat emitted from the electronic component 342 may be transferred to the clad metal 61 via the heat conductor 62.

According to an embodiment, the heat conductor 62 thermally interconnects the electronic component 342 and the clad metal 61 while reducing the separation space between the electronic component 342 and the clad metal 61 of the inner metal C.

According to an embodiment, the second metal 612 included in the clad metal 61 of the inner metal C includes an opening 6121 corresponding to the electronic component 342. The opening 6121 of the second metal 612 may be provided by removing a portion of the second metal 612 corresponding to the space between the first metal 611 and the electronic component 342 to thermally connect the first metal 611, which has a better thermal conductivity property than the second metal 612, to the electronic component 342. The opening 6121 may be formed through, for example, cutting or etching. Alternatively, the second metal 612 may be formed to include an open region, the open region corresponding to the opening 6121.

According to an embodiment, the electronic component 342 is in direct/indirect contact with the first metal 611 of the clad metal 61 through the opening 6121 in the second metal 612. The heat conductor 62 may be at least partially disposed in the opening 6121.

According to an embodiment, the thermal conductivity of the heat conductor 62 is higher than the second thermal conductivity of the second metallic material (e.g., stainless steel) of the second metal 612.

According to an embodiment, the thermal conductivity of the heat conductor 62 is lower than the first thermal conductivity of the first metallic material (e.g., copper) of the first metal 612 and may be higher than the second thermal conductivity of the second metallic material (e.g., stainless steel) of the second metal 612.

According to some embodiments, the thermal conductivity of the heat conductor 62 is higher than or substantially equal to the first thermal conductivity of the first metallic material (e.g., copper) of the first metal 612.

According to an embodiment, the heat conductor 62 includes a thermal interface material (TIM), or **TIM** is provided on a surface of the heat conductor 62 (e.g. between the heat conductor 62 and the electronic component 342). The TIM may be in close contact with the clad material 61 to reduce the air gaps or air bubbles (e.g. bubbles) between the electronic component 342 and the clad metal 61 of the inner metal C in order to suppress the degradation of heat transfer performance. The TIM may include, for example, thermal grease, thermal paste, thermal compound, or heat transfer paste (HTP).

According to an embodiment, the opening 6121 in the second metal 612 is provided (or defined) as a through hole. The second metal 612 may include a metal area surrounding the entire opening 6121 of the through hole.

According to some embodiments, the opening 6121 in the second metal 612 is provided as a notch (not separately illustrated).

According to some embodiments, the opening 6121 of the second metal 612 is interpreted as a "recess" in the clad metal 61 provided (or defined) to correspond to the electronic component 342.

According to an embodiment, heat transferred from the electronic component 342 to the first metal 611 of the clad metal 61 through the heat conductor 62 is transferred from the first metal 611 to the second metal 612 through the first bonding portion or the first interface between the first metal 611 and the second metal 612.

According to an embodiment, in order to suppress the deterioration in heat conduction performance between the first metal 611 and the second metal 612, the first bonding portion or the first interface between the first metal 611 and the second metal 612 is configured such that air gaps are reduced or not included between the first metal 611 and the second metal 612.

According to an embodiment, the first bonding portion between the first metal 611 and the second metal 612 is configured in the form in which the first metallic material of the first metal 611 and the second metallic material of the second metal 612 are mixed and bonded through fusion (i.e. fusion bonding) so that heat conduction performance between the first metal 611 and the second metal 612 can be ensured, maintained or improved.

According to an embodiment, the first metallic material of the first metal 611 and the second metallic material of the second metal 612 have mutual affinity for fusion. In other words, the first metallic material and the second metallic material may be compatible for fusion bonding together.

According to an embodiment, heat transferred from the electronic component 342 to the first metal 611 of the clad metal 61 through the heat conductor 62 is transferred from the first metal 611 to the third metal 613 through the second bonding portion or the second interface between the first metal 611 and the third metal 613.

According to an embodiment, in order to suppress the deterioration in heat conduction performance between the first metal 611 and the third metal 613, the second bonding portion or the second interface between the first metal 611 and the third metal 613 is configured such that air gaps are reduced or not included between the first metal 611 and the third metal 613.

According to an embodiment, the second bonding portion between the first metal 611 and the third metal 613 is configured in the form in which the first metallic material of the first metal 611 and the third metallic material of the third metal 613 are mixed and bonded through fusion (i.e. fusion bonding) so that heat conduction performance between the first metal 611 and the third metal 613 can be ensured, maintained or improved.

According to an embodiment, the first metallic material of the first metal 611 and the third metallic material of the third metal 613 have mutual affinity for fusion. In other words, the first metallic material and the third metallic material may be compatible for fusion bonding together.

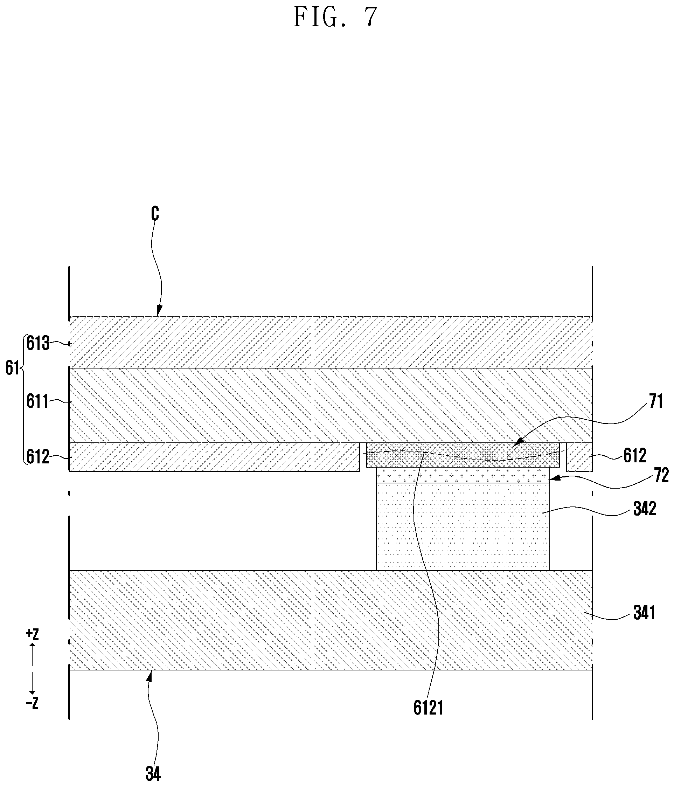

FIG. 7 is a cross-sectional view illustrating an inner metal C, a first board assembly 34, a first heat conductor 71, and a second heat conductor 72 according to an embodiment of the disclosure. It is to be understood at the present disclosure envisages and includes all combinations of features and/or embodiments disclosed in relation to FIG. 7. That is, every combination of the features described below in relation to FIG. 7 should be considered as included in the present disclosure as a specific example.

Referring to FIG. 7, the inner metal C may include a clad metal 61. The clad metal 61 may include a first metal 611, a second metal 612, and/or a third metal 613.

According to an embodiment, the first board assembly 34 includes a printed circuit board 341 and an electronic component 342 disposed on the printed circuit board 341.

According to an embodiment, the electronic component 342 is in indirect contact with the first metal 611 of the clad metal 61 through an opening 6121 provided (or defined) in the second metal 612 of the clad metal 61.

According to an embodiment, heat emitted from the electronic component 342 is transferred to the first metal 611 of the clad metal 61 through the first heat conductor 71 and the second heat conductor 72.

According to an embodiment, the first heat conductor 71 is at least partially disposed between the electronic component 342 and the first metal 611 of the clad metal 61. The second heat conductor 72 may be at least partially disposed between the electronic component 342 and the first heat conductor 71. The combination of the first heat conductor 71 and the second heat conductor 72 may be located in the opening 6121 provided (or defined) in the second metal 612 of the clad metal 61. The combination of the first heat conductor 71 and the second heat conductor 72 may thermally interconnect the electronic component 342 and the clad metal 61.

According to an embodiment, the opening 6121 in the second metal 612 is provided by removing a portion of the second metal 612 corresponding to the space between the first metal 611 and the electronic component 342 to facilitate thermally connecting the first metal 611, which has a better thermal conductivity property than the second metal 612, to the electronic component 342. Alternatively, the second metal 612 may be formed to include an open region, the open region corresponding to the opening 6121.

According to an embodiment, the first heat conductor 71 is located at least partially in the opening 6121 of the second metal 612 to reduce the separation space between the electronic component 342 and the first metal 611 of the clad metal 61.

According to an embodiment, the first heat conductor 71 includes one or more metal bodies such as a metal block (e.g., a copper block), a metal plate (e.g., a copper plate), or a metal sheet (e.g., a copper sheet).

According to an embodiment, the thermal conductivity of the first heat conductor 71 is higher than the second thermal conductivity of the second metallic material (e.g., stainless steel) of the second metal 612.

According to an embodiment, the thermal conductivity of the first heat conductor 71 is substantially the same as or higher than the first thermal conductivity of the first metallic material (e.g., copper) of the first metal 611.

According to an embodiment, the first heat conductor 71 includes the same metallic material (e.g., copper) as the first metal 611 of the clad metal 61.

According to some embodiments, the first heat conductor 71 includes a metallic material different from the first metal 611 and the second metal 612 (or the third metal 613) of the clad metal 61.

According to various embodiments, the thermal conductivity of the first heat conductor 71 is lower than the first thermal conductivity of the first metallic material (e.g., copper) of the first metal 611 and is higher than the second thermal conductivity of the second metallic material (e.g., stainless steel) of the second metal 612.

According to an embodiment, the first heat conductor 71 is disposed on (or coupled to, or arranged on) the first metal 611 of the clad metal 61.

According to an embodiment, in order to suppress the deterioration in heat conduction performance between the first metal 611 and the first heat conductor 71, a bonding portion or an interface between the first metal 611 and the first heat conductor 71 is configured such that the air gaps are reduced or not included between the first metal 611 and the first heat conductor 71.

According to an embodiment, the bonding portion between the first metal 611 and the first heat conductor 71 is configured in the form in which the first metallic material of the first metal 611 and the fourth metallic material of the first heat conductor 71 are mixed and bonded through fusion (i.e. fusion bonding) so that heat conduction performance between the first metal 611 and the first heat conductor 71 can be ensured, provided or improved.

According to an embodiment, the first metallic material of the first metal 611 and the fourth metallic material of the first heat conductor 71 have mutual affinity for fusion. In other words, the first metallic material and the fourth metallic material may be compatible for fusion bonding together.

According to an embodiment, the second heat conductor 72 includes thermal grease, thermal paste, thermal compound, or TIM such as HTP. In order to suppress the deterioration in heat transfer performance, the TIM may be in close contact with the electronic component 342 and the first heat conductor 71 to reduce air gaps or bubbles between the electronic component 342 and the first heat conductor 71.

According to an embodiment, the first heat conductor 71 is superior to the second heat conductor 72 in terms of a heat transfer property. The thermal conductivity of the first heat conductor 71 may be higher than that of the second heat conductor 72.

According to some embodiments, although not separately illustrated, heat emitted from the electronic component 342 is transferred to the clad metal 61 of the inner metal C through the scheme of direct heat conduction. Heat emitted from the electronic component 342 may be transferred to the clad metal 61 through direct (or physical) contact between the electronic component 342 and the clad metal 61.

According to some embodiments, although not separately illustrated, the opening 6121 in the second metal 612 is omitted, and the first heat conductor 71 may be in direct contact with the second metal 612.

According to some embodiments, although not separately illustrated, when the second metal 612 of the clad metal 61 has a thermal conductivity property that is capable of smoothly diffusing or dissipating heat, the opening 6121 in the second metal 612 is omitted, and heat emitted from the electronic component 342 may be configured to be directly or indirectly transferred to the second metal 612.

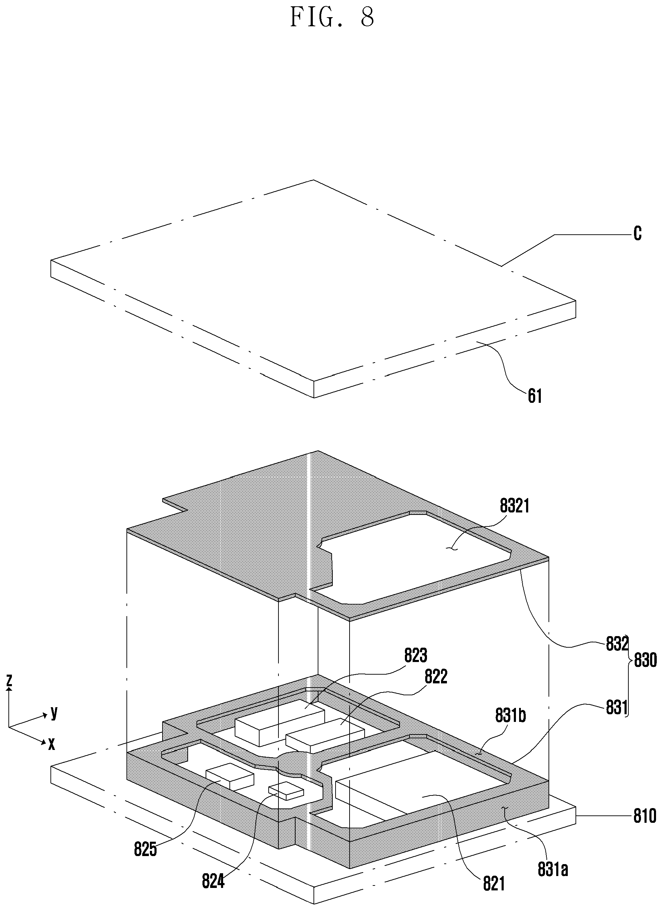

FIG. 8 is a perspective view illustrating the portion indicated by reference numeral "216" in FIG. 2, according to an embodiment of the disclosure. It is to be understood at the present disclosure envisages and includes all combinations of features and/or embodiments disclosed in relation to FIG. 8. That is, every combination of the features described below in relation to FIG. 8 should be considered as included in the present disclosure as a specific example.

Referring to FIG. 8, the first board assembly 34 includes a printed circuit board 810 (e.g., the printed circuit board 341 in FIG. 6 or FIG. 7), a plurality of electronic components 821, 822, 823, 824, and 825 disposed on the printed circuit board 810, and/or an electromagnetic shield (or an electromagnetic shield member, or electromagnetic shielding body) 830 disposed on the printed circuit board 810. Although the plurality of electronic components is illustrated as five components, it will be appreciated that this number is non-limiting and used for the purposes of the present examples only; fewer or more electronic components could instead be provided on the printed circuit board 810.

According to an embodiment, the plurality of electronic components 821, 822, 823, 824, and 825 are disposed on one surface of the printed circuit board 810 that faces the rear plate 12 (see FIG. 2).

According to an embodiment, the electromagnetic shield 830 is disposed on one surface of the printed circuit board 810 that faces the front plate 11 (see FIG. 2). The electromagnetic shield 830 may at least partially cover the plurality of electronic components 821, 822, 823, 824, and 825.

According to an embodiment, the electromagnetic shield 830 blocks noise introduced from the outside of the electronic device 1 (see FIG. 1) and/or reduces an electromagnetic influence (e.g., EMI) of peripheral electric components in the electronic device 1 on the plurality of electronic components 821, 822, 823, 824, and 825). The electromagnetic shield 830 may reduce an electromagnetic influence (e.g., EMI) of the plurality of electronic components 821, 822, 823, 824, and 825 on peripheral electric components in the electronic device 1. The electromagnetic shield 830 may be referred to as a "shield can".

According to an embodiment, the electromagnetic shield 830 is interpreted as a portion of a ground structure included in the electronic device 1 (see FIG. 2).

According to an embodiment, the electromagnetic shield 830 is electrically connected to a ground area (e.g., a ground plane) (not separately illustrated) included in the printed circuit board 810. The electromagnetic shield 830 may be disposed on the printed circuit board 810 via a conductive adhesive material (or bonding material) (not separately illustrated), and may be electrically connected to the ground area of the printed circuit board 810 through the conductive adhesive material.

According to an embodiment, the electromagnetic shield 830 is electrically connected to the third ground structure included in the frame 4 (see FIGS. 4 and 5). The third ground structure may include the outer metal A of the side 13 (see FIGS. 4 and 5) and the inner metal C of the first support portion 31 (see FIGS. 4 and 5).

According to an embodiment, the electromagnetic shield 830 is electrically connected to the inner metal C of the first support portion 31 (see FIGS. 4 and 5) via a flexible conductor (or a flexible conductive portion or a flexible conductive member) (not separately illustrated) disposed between the electromagnetic shield 830 and the first support portion 31 (see FIGS. 4 and 5). The flexible conductor may include, for example, a conductive clip (e.g., a conductive structure including an elastic structure), a pogo pin, a spring, conductive Poron, conductive sponge, conductive rubber, conductive tape, or a conductive connector.

According to an embodiment, the electromagnetic shield 830 includes titanium, an amorphous alloy, a metal-ceramic composite material (e.g., cermet), or stainless steel.

According to various embodiments, the electromagnetic shield 830 additionally or alternatively includes various metallic materials such as magnesium, a magnesium alloy, aluminum, an aluminum alloy, a zinc alloy, or a copper alloy.

The electromagnetic shield 830 may include other metallic materials.

According to an embodiment, the electromagnetic shield 830 includes a conductive wall structure 831 disposed on (or coupled to, or arranged on) the printed circuit board 810, and a conductive cover plate 832 disposed on (or coupled to) the conductive wall 831.

According to an embodiment, the conductive wall 831 of the electromagnetic shield 830 includes a wall 831a with a height extending from one end to the other end, and a cover plate support portion 831b extending from the wall 831a. The wall 831a may be erected on the printed circuit board 810 and connected to the printed circuit board 810. One end portion of the wall 831a may be mechanically and electrically connected to the printed circuit board 810 via a conductive adhesive material (or bonding material) such as solder paste, copper paste, silver paste, aluminum paste, silver-aluminum paste, carbon paste, or carbon nanotube (CNT) paste. The cover plate support portion 831b may extend from the other end of the wall 831b and may be located to be spaced apart from the printed circuit board 810. The conductive cover plate 832 may be disposed on (or coupled to, or arranged on) the cover plate support portion 831b via a conductive adhesive material and may be electrically connected to the wall 831a. The conductive cover plate 832 may be supported by the cover plate support portion 831b and may be located to be spaced apart from the printed circuit board 810. The combination of the cover plate support 831b and the conductive cover plate 832 may be located to be spaced apart from the printed circuit board 810 with at least some of the plurality of electronic components 821, 822, 823, 824, and 825 interposed therebetween.

According to an embodiment, the conductive cover plate 832 of the electromagnetic shield 830 is substantially parallel to the printed circuit board 810.

According to an embodiment, heat emitted from the first electronic component 821 (e.g., the electronic component 342 in FIG. 6 or FIG. 7) is transferred to the clad metal 61 of the inner metal C.

According to an embodiment, the conductive cover plate 832 of the electromagnetic shield 830 includes an opening 8321 corresponding to the first electronic component 821 (e.g., the electronic component 342 in FIG. 6 or FIG. 7). The first electronic component 821 may be in direct (or physical) or indirect contact with the clad metal 61 of the inner metal C through the opening 8321 in the conductive cover plate 832. Heat emitted from the first electronic component 821 may be transferred to the clad metal 61 of the inner metal C without substantially passing through the electromagnetic shield 830.

According to an embodiment, the scheme of indirect heat conduction in which the heat emitted from the first electronic component 821 (e.g., the electronic component 342 in FIG. 6 or FIG. 7) is transferred to the clad metal 61 of the inner metal C includes at least one heat conductor disposed between the first electronic component 821 and the clad metal 61. The at least one heat conductor disposed between the first electronic component 821 and the clad metal 61 may thermally interconnect the first electronic component 821 and the clad metal 61. The heat emitted from the first electronic component 821 may be transferred to the clad metal 61 via the at least one heat conductor disposed between the first electronic component 821 and the clad metal 61. For example, the at least one heat conductor disposed between the first electronic component 821 and the clad metal 61 may include the heat conductor 62 of FIG. 6. For example, the at least one heat conductor disposed between the first electronic component 821 and the clad metal 61 may include the first heat conductor 71 and the second heat conductor 72 of FIG. 7.

According to an embodiment, the first electronic component 821 corresponding to the opening 8321 of the conductive cover plate 832 includes a processor (or at least one processor). The first electronic component 821 is not limited to a processor and may include various other electronic components that consume current and emit heat, such as a communication module or a charging module.

According to various embodiments, a plurality of electronic components replacing the first electronic component 821 are provided.

According to various embodiments, although not separately illustrated, the opening 8321 in the conductive cover plate 832 is omitted. Heat emitted from the first electronic component 821 may be configured to be directly or indirectly transferred to the conductive cover plate 832. Heat transferred from the first electronic component 821 to the conductive cover plate 832 may be configured to be directly or indirectly transferred to the clad metal 61. For example, the conductive cover plate 832 may be in direct contact with the clad metal 61, or may be in indirect contact with the clad metal 61 via a heat conductor disposed between the conductive cover plate 832 and the clad metal 61.

According to an embodiment, heat emitted from one or more second electronic components 822, 823, 824, and 825 is transferred to the clad metal 61 of the inner metal C via the electromagnetic shield 830.

According to an embodiment, heat emitted from the one or more second electronic components 822, 823, 824, and 825 is transferred to the electromagnetic shield 830 through indirect heat conduction. The one or more second electronic components 822, 823, 824, and 825 may be in indirect contact with the conductive cover plate 832 of the electromagnetic shield 830. A heat conductor such as a **TIM** (not separately illustrated) may be disposed between the one or more second electronic components 822, 823, 824, and 825 and the conductive cover plate 832 to thermally interconnect the one or more second electronic components 822, 823, 824, and 825 and the conductive cover plate 832. Heat emitted from the one or more second electronic components 822, 823, 824, and 825 may be transferred to the electromagnetic shield 830 via a heat conductor (not separately illustrated) disposed between the one or more second electronic components 822, 823, 824, and 825 and the conductive cover plate 832.

According to some embodiments, heat emitted from the one or more second electronic components 822, 823, 824, and 825 is transferred to the electromagnetic shield 830 through direct heat conduction. The one or more second electronic components 822, 823, 824, and 825 may be in direct (or physical) contact with the conductive cover plate 832 of the electromagnetic shield 830.

According to an embodiment, heat transferred from the one or more second electronic components 822, 823, 824, and 825 to the electromagnetic shield 830 is transferred to the clad metal 61 of the inner metal C through indirect heat conduction. The conductive cover plate 832 of the electromagnetic shield 830 may be in indirect contact the clad metal 61 of the inner metal C. A heat conductor such as a **TIM** (not separately illustrated) may be disposed between the conductive cover plate 832 and the clad metal 61 to thermally interconnect the conductive cover plate 832 and the clad metal 61. Heat transferred from the one or more second electronic components 822, 823, 824, and 825 to the electromagnetic shield 830 may be transferred to the clad metal 61 via the heat conductor (not separately illustrated) disposed between the conductive cover plate 832 and the clad metal 61.

According to some embodiments, heat transferred from the one or more second electronic components 822, 823, 824, and 825 to the electromagnetic shield 830 is transferred to the clad metal 61 of the inner metal C through direct heat conduction. The conductive cover plate 832 of the electromagnetic shield 830 may be in direct (or physical) contact with the clad metal 61 of the inner metal C.

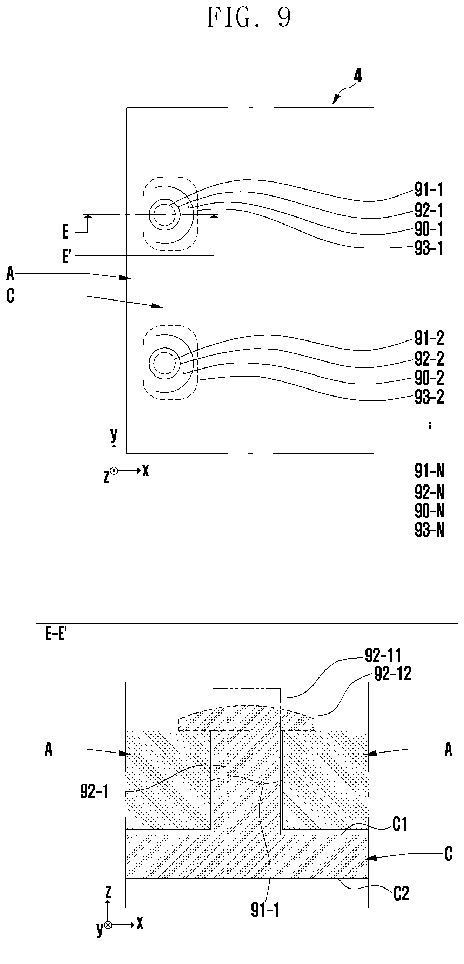

FIG. 9 is a view illustrating a figure illustrating a frame 4 according to an embodiment of the disclosure and a figure illustrating a cross-sectional view of the frame 4 taken along line E-E'. It is to be understood at the present disclosure envisages and includes all combinations of features and/or embodiments disclosed in relation to FIG. 9. That is, every combination of the features described below in relation to FIG. 9 should be considered as included in the present disclosure as a specific example.

Referring to FIG. 9, the frame 4 may include an outer metal A and an inner metal C.

According to an embodiment, the outer metal A includes a plurality of hole structures 90-1, 90-2, ..., 90-N having a plurality of holes 91-1, 91-2, ..., 91-N. For example, each hole structure of the plurality of hole structures 90-1, 90-2, ..., 90-N includes a hole.

According to an embodiment, when viewed from above of the front surface 10A (see FIG. 1) of the electronic device 1 (e.g., when viewed in the -z axis direction) or when viewed from above the rear surface 10B (see FIG. 1) of the electronic device 1 (e.g., when viewed in the +z-axis direction), the plurality of hole structures 90-1, 90-2, ..., 90-N included in the outer metal A overlap the inner metal C.

According to an embodiment, the inner metal C includes a plurality of poles (or extensions, extending portions, protrusions, pins or rods) 92-1, 92-2, ..., 92-N corresponding to the plurality of holes 91-1, 91-2, ..., 91-N in the outer metal A. The plurality of poles 92-1, 92-2, ..., 92-N may be inserted into the plurality of holes 91-1, 91-2, ..., 91-N. For example, each pole of the plurality of poles 92-1, 92-2, ..., 92-N may correspond to, and be inserted through, one of the plurality of holes 91-1, 91-2, ..., 91-N.

According to an embodiment, the plurality of holes 91-1, 91-2, ..., 91-N and the plurality of poles 92-1, 92-2, ..., 92-N guide the coupling between the inner metal C and the outer metal A.

According to an embodiment, the plurality of poles 92-1, 92-2, ..., 92-N are portions of the clad metal (e.g., the clad metal 61 in FIG. 6) included in the inner metal C and/or extend from the clad metal.

According to an embodiment, the plurality of poles 92-1, 92-2, ..., 92-N inserted into the plurality of holes 91-1, 91-2, ..., 91-N are coupled to the outer metal A through fusion (e.g., laser welding) or various other methods.

According to an embodiment, the end portions of the plurality of poles 92-1, 92-2, ..., 92-N have a bolt head or rivet head shape by being deformed from the shape indicated by reference numeral "92-11" to the shape "92-12" and may interfere with the outer metal A so that the outer metal A is not separated from the inner metal C, i.e. the deformation may be intended to prevent separation of the outer metal A from the inner metal C.

According to an embodiment, the plurality of poles 92-1, 92-2, ..., 92-N protrude from a front surface area C1 of the inner metal C directed toward the front surface 10A (see FIG. 1) of the electronic device 1. The plurality of hole structures 90-1, 90-2, ..., 90-N of the outer metal A including the plurality of holes 91-1, 91-2, ..., 91-N may be placed on the front surface area C1 of the inner metal C.

According to some embodiments, although not illustrated separately, the plurality of poles 92-1, 92-2, ..., 92-N protrude from a rear surface area C2 of the inner metal C directed toward the rear surface 10B (see FIG. 1) of the electronic device 1. The plurality of hole structures 90-1, 90-2, ..., 90-N of the outer metal A including the plurality of holes 91-1, 91-2, ..., 91-N may be placed on the rear surface area C2 of the inner metal C.

According to an embodiment, combinations (e.g., connecting portions 93-1, 93-2, ..., 93-N) of the plurality of hole structures 90-1, 90-2, ..., 90-N of the outer metal A and the plurality of poles 92-1, 92, ..., 92-N of the inner metal C are arranged along the outer metal A.

According to some embodiments, although not separately illustrated, the inner metal C is configured to include the plurality of hole structures 90-1, 90-2, ..., 90-N, and the outer metal A is configured to include the plurality of poles 92-1, 92-2, ..., 92-N.

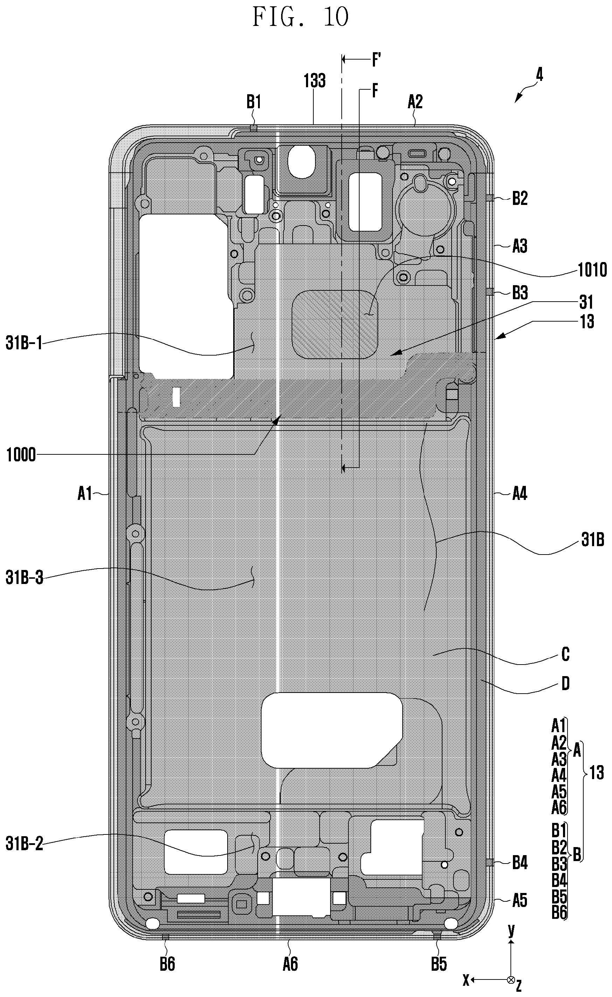

FIG. 10 is a view illustrating a frame 4 according to an embodiment of the disclosure. It is to be understood at the present disclosure envisages and includes all combinations of features and/or embodiments disclosed in relation to FIG. 10. That is, every combination of the features described below in relation to FIG. 10 should be considered as included in the present disclosure as a specific example.

Referring to FIG. 10, the frame 4 may include a side 13 and a first support portion 31. The side 13 may include an outer metal A including a plurality of outer metals A1, A2, A3, A4, A5, and A6 and an outer non-metal B including a plurality of outer non-mentals B1, B2, B3, B4, B5, and B6. The first support portion 31 may include an inner metal C connected to the outer metal A of the side 13 and an inner non-metal D connected to the outer non-metal B of the side 13.

According to an embodiment, the frame 4 includes a metal support portion 1000 extending from the outer metal A. When viewed from above the front surface 10A of the electronic device 1 (see FIG. 1) (e.g., when viewed in the -z axis direction), or when viewed from above the rear surface 10B of the electronic device 1 (see FIG. 1) or from above a second surface 31B of the frame 4 (e.g., when viewed in the +z-axis direction), the metal support portion 1000 may at least partially overlap the inner metal C.

According to an embodiment, the metal support portion 1000 is disposed on (or coupled to, or arranged over) the first support portion 31 between the first support portion 31 and the rear plate 12 (see FIG. 2). When viewed from above the first support surface 31A of the first support portion 31, the first support portion 31 may cover at least a portion of the metal support portion 1000.

According to some embodiments, although not separately illustrated, the metal support portion 1000 is disposed on (or coupled to, or arranged over) the first support portion 31 between the first support portion 31 and the front plate 11 (see FIG. 2). The metal support portion 1000 may be at least partially located between a display module 201 (see FIG. 2) and the first support portion 31. When viewed from above the second support surface 31B of the first support portion 31, the first support portion 31 may cover at least a portion of the metal support portion 1000. Herein, the metal support portion 1000, or a part thereof, may be described to be arranged over the clad metal 61, which means the metal support portion 1000, or the part thereof, is arranged over the clad metal 61 between the clad metal 61 and the front plate 11 or is arranged over the clad metal 61 between the clad metal 61 and the rear plate 12; in other words, the word "over" does not strictly indicate a particular direction.

According to an embodiment, the metal support portion 1000 interconnects the first outer metal A1 and the fourth outer metal A4 of the outer metal A.

According to an embodiment, when viewed from above the second support surface 31B of the first support portion 31, the metal support portion 1000 is at least partially located or arranged between the third support area 31B-3 of the first support portion 31 and the third side 133.

According to an embodiment, when viewed from above the second support surface 31B of the first support portion 31, an area 1010 of the inner metal C of the first support portion (or the clad metal 61 in FIG. 6 or FIG. 7), which is brought into in direct or indirect contact with the electronic component 342 of FIG. 6 or 7 or the first electronic component 821 of FIG. 8, is located or arranged between the metal support portion 1000 and the third side 133.

Although not separately illustrated, the shape or position of the metal support portion 1000 may vary without being limited to the illustrated example.

According to an embodiment, an integrated or single structure (e.g., a single continuous structure or a complete structure) including the outer metal A and the metal support portion 1000 is provided. The outer metal A and the metal support portion 1000 may include the same metallic material.

According to an embodiment, the metal support portion 1000, or at least a part thereof, supports the first support portion 31.

According to an embodiment, the metal support portion 1000, or at least a part thereof, is coupled with the inner metal C.

According to an embodiment, the metal support portion 1000, or at least a part thereof, is coupled with the clad metal 61 (see FIG. 6 or 7) of the inner metal C.

According to an embodiment, a bonding portion (not separately illustrated) between the metal support portion 1000 and the inner metal C (or the clad metal 61 in FIG. 6 or FIG. 7) is configured in a form in which the metal material of the metal support portion 1000 and the metal material of the inner metal C (or the clad metal 61 of FIG. 6 or FIG. 7) are mixed and bonded through fusion so that the heat conduction performance between the metal support portion 1000 and the inner metal C (or the clad metal 61 of FIG. 6 or FIG. 7) can be ensured or improved.

According to an embodiment, the metal support portion 1000 and the inner metal C (or the clad metal 61 of FIG. 6 or FIG. 7) are fused to each other through laser welding (e.g., spot welding or wobble welding). In order to improve the heat conduction performance between the metal support portion 1000 and the inner metal C, the areas where the metal support portion 1000 and the inner metal C are bonded through fusion may be implemented as much as possible.

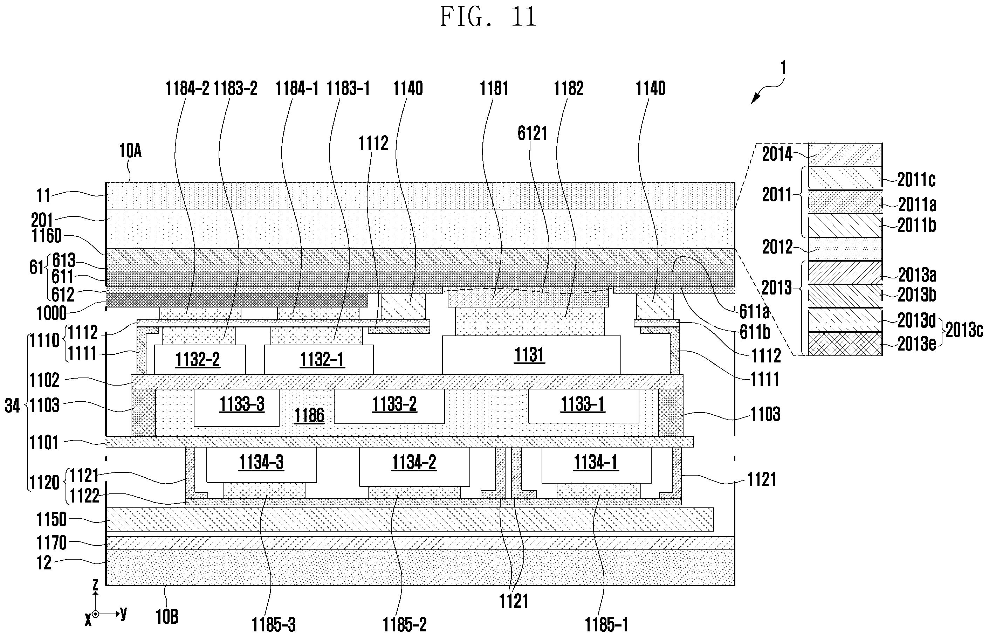

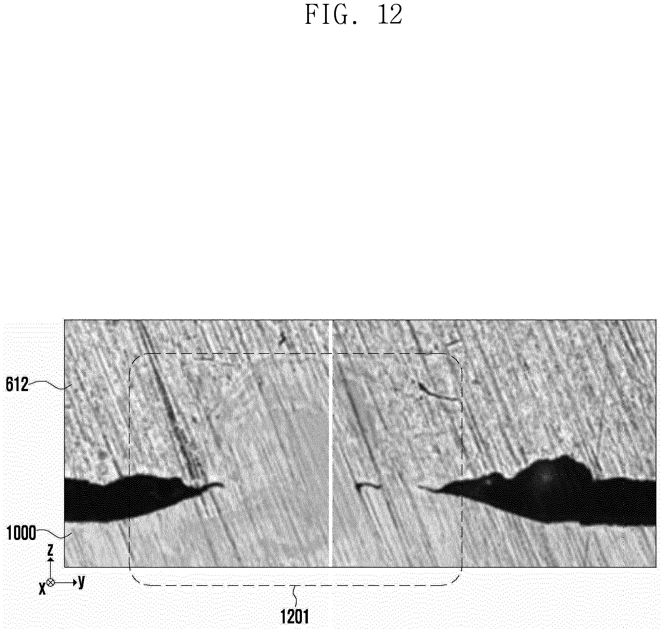

FIG. 11 is a cross-sectional view of an electronic device 1 (see FIG. 1) taken along line F-F' of FIG. 10 according to an embodiment of the disclosure. FIG. 12 is a cross-sectional view illustrating the second metal 612 and the metal support portion 1000 according to an embodiment of the disclosure. It is to be understood at the present disclosure envisages and includes all combinations of features and/or embodiments disclosed in relation to FIGS. 11 and 12. That is, every combination of the features described below in relation to FIGS. 11 and 12 should be considered as included in the present disclosure as a specific example.

Referring to FIGS. 11 and 12, the electronic device 1 includes a front plate 11, a rear plate 12, a display module 201, a clad metal 61, a metal support portion 1000, a first board assembly 34, at least one flexible conductor 1140, a metal plate 1150, a first heat radiation sheet 1160, a second heat radiation sheet 1170, a first heat conductor 1181, a second heat conductor 1182, one or more third heat conductors 1183-1 and 1183-2, one or more fourth heat conductors 1184-1 and 1184-2, one or more fifth heat conductors 1185-1, 1185-2, and 1185-3, and/or a sixth heat conductor 1186.

According to an embodiment, at least a portion of the display module 201 is located between the front plate 11 and the clad metal 61.

According to an embodiment, the display module 201 includes a display panel 2011, a base film 2012, a lower panel 2013, and/or an optical layer 2014.

According to an embodiment, the display panel 2011 is disposed between the base film 2012 and the optical layer 2014. The base film 2012 may be disposed between the display panel 2011 and the lower panel 2013. The optical layer 2014 may be disposed between the display panel 2011 and the front plate 11. Between the display panel 2011 and the base film 2012, between the base film 2012 and the lower panel 2013, and/or between the display panel 2011 and the optical layer 2014, various polymer adhesive materials (or adhesive members) or bonding materials (or bonding members) (not illustrated separately) may be disposed.

According to an embodiment, the display module 201 is coupled to the front plate 11 via an optically transparent adhesion portion (or optically transparent bonding portion) (not separately illustrated) disposed between the optical layer 2014 and the front plate 11. The optical transparent adhesion portion may include, for example, an optical clear adhesive (OCA), an optical clear resin (OCR), or a super view resin (SVR).

According to an embodiment, the display panel 2011 includes a light-emitting layer 2011a, a thin film transistor (TFT) film 2011b, and/or an encapsulation (e.g., a thin-film encapsulation (TFE)) 2011c. The light-emitting layer 2011a may include, for example, a plurality of pixels implemented by light-emitting elements such as organic light-emitting diodes (OLEDs) or micro-LEDs. The light emitting layer 2011a may be disposed on the TFT film 2011b through organic evaporation. The TFT film 2011b may be disposed between the light-emitting layer 2011a and the base film 2012. The TFT film 2011b may refer to a film structure in which at least one TFT is disposed on a substrate through a series of processes such as deposition, patterning, and/or etching. At least one TFT may control current to the light-emitting elements of the light-emitting layer 2011a to turn on or off the pixels or to adjust brightness of the pixels. The at least one TFT may be implemented as, for example, an amorphous silicon (a-Si) TFT, a liquid crystalline polymer (LCP) TFT, a low-temperature polycrystalline oxide (LTPO) TFT, or a low-temperature polycrystalline silicon (LTPS) TFT.

According to an embodiment, the display panel 2011 includes a storage capacitor, and the storage capacitor may maintain a voltage signal to the pixels, may maintain a voltage applied to the pixels within one frame, or may suppress a change in the gate voltage of the TFT due to leakage during a light-emitting period of time. By a routine for controlling the at least one TFT (e.g., initialization or data write), the storage capacitor may maintain the voltage applied to the pixels at regular time intervals.

According to an embodiment, the display panel 2011 is implemented based on OLEDs, and the encapsulation 2011c may cover the light-emitting layer 2011a. The organic materials and electrodes that emit light in the OLEDs may react very sensitively to oxygen and/or moisture and may lose light-emitting properties thereof. In order to suppress or prevent this phenomenon, the encapsulation 2011c may seal the light-emitting layer 2011a to prevent oxygen and/or moisture from penetrating into the OLEDs. The encapsulation 2011c may serve as a pixel protection layer for protecting the plurality of pixels of the light-emitting layer 2011a.

According to an embodiment, the base film 2012 supports and protects the display panel 2011. The base film 2012 may be referred to as a "protective film", a "back film", or a "back plate".

According to an embodiment, the lower panel 2013 includes a plurality of layers for various functions. Various polymeric adhesive materials (or bonding materials) (not illustrated separately) may be disposed between adjacent ones of the plurality of layers included in the lower panel 2013. The lower panel 2013 may include, for example, a light-blocking layer 2013a, a buffer layer 2013b, and/or a lower layer 2013c. The light-blocking layer 2013a may be disposed between the base film 2012 and the buffer layer 2013b. The buffer layer 2013b may be disposed between the light-blocking layer 2013a and the lower layer 2013c. The light-blocking layer 2013a may block at least some of light incident from the outside. The light-blocking layer 2013a may include, for example, an embossed layer (not illustrated separately). The embossed layer may be, for example, a black layer including an uneven pattern. The buffer layer 2013b may alleviate an external impact applied to the display module 201. The buffer layer 2013b may include, for example, a sponge layer or a cushion layer. The lower layer 2013c may alleviate an external impact applied to the electronic device 1 or the display module 201.

According to an embodiment, the lower layer 2013c is configured to diffuse, disperse, or dissipate heat generated in the electronic device 1 or the display module 201.

According to an embodiment, the lower layer 2013c is configured to absorb or shield electromagnetic waves.

According to an embodiment, the lower layer 2013c includes (e.g. additionally or alternatively includes) a composite sheet 2013d or a copper sheet 2013e. The composite sheet 2013d may be a sheet obtained by combining layers or sheets having different properties. For example, the composite sheet 2013d may include at least one of polyimide or graphite. The composite sheet 2013d may also be replaced with a single sheet including a single material (e.g., polyimide or graphite). The composite sheet 2013d may be disposed between the buffer layer 2013b and the copper sheet 2013e. The copper sheet 2013e may be replaced with various other metal sheets.

According to various embodiments, at least a portion of the lower layer 2013c includes a conductive member (e.g., a metal plate). The conductive member of the lower layer 2013c may help reinforce the rigidity of the display module 201. The conductive member of the lower layer 2013c may block ambient noise. The conductive member of the lower layer 2013c may be used to dissipate heat emitted from peripheral heat emitting components (e.g., a display driving circuit (DDI) (not separately illustrated)). The conductive member of the lower layer 2013c may include at least one of, for example, copper, aluminum, stainless steel, and a clad metal (e.g., a clad metal including a stainless steel layer and an aluminum layer, or a stainless steel layer and a copper layer).

According to various embodiments, the lower layer 2013c includes various layers (not separately illustrated) for various other functions.

According to various embodiments, at least one additional polymer layer (e.g., a layer containing PI, poly ethylene terephthalate (PET), or thermoplastic polyurethane (TPU)) is provided on the rear surface of the display panel 2011 in addition to the base film 2012.

According to various embodiments, at least one of the plurality of layers which may be included in the lower panel 2013 according to the above description (e.g., the light-blocking layer 2013a, the buffer layer 2013b, the composite sheet 2013d, and the copper sheet 2013e) is instead omitted.

According to various embodiments, the disposed order of the plurality of layers included in the lower panel 2013 is not limited to the illustrated embodiment and may be variously changed.

According to an embodiment, the optical layer 2014 includes a polarizing layer (or a polarizer) or a retardation layer (or a retarder). The polarizing layer and the retardation layer may improve outdoor visibility of a screen. For example, the optical layer 2014 may selectively allow light generated from a light source of the display panel 2011 and oscillating in a predetermined direction to pass therethrough. In various embodiments, the polarizing layer and the retardation layer are combined and provided as a single layer, and such a layer may be interpreted as a "circular polarizing layer".

According to various embodiments, the polarizing layer (or circular polarizing layer) is omitted. For example, a black pixel define layer (PDL) and/or a color filter is provided in place of the polarizing layer.

According to various embodiments, a plurality of layers included in the display panel 2011 or the lower panel 2013, or a laminating structure or laminating order thereof varies. The display module 201 may be implemented by omitting some of the components or adding other components depending on the form of provision thereof or the trend of convergence.

According to an embodiment, the display module 201 is implemented to be substantially rigid. For example, the base film 2012 is substantially rigid.

According to various embodiments, the display module 201 is implemented flexibly. For example, the base film 2012 includes a flexible film formed of a polymer or plastic, such as PI or PET. For example, the front plate 11 may be provided in the form of a flexible thin film (e.g., a thin film layer) as a portion of the display module 201. The front plate 11 may include, for example, a plastic film (e.g., a PI film) or thin glass (e.g., ultra-thin glass (UTG)).

According to an embodiment, the clad metal 61 includes a first metal 611, a second metal 612, and/or a third metal 613. The first metal 611 may be at least partially disposed between the second metal 612 and the third metal 613.

According to an embodiment, the first metal 611 includes a first surface 611a directed toward the front plate 11 and a second surface 611b directed toward the rear plate 12. The second metal 612 may be at least partially disposed on the second surface 611b. The third metal 613 may be at least partially disposed on the first surface 611a.

According to an embodiment, the metal support portion 1000 is coupled to the clad metal 61 between the clad metal 61 and the rear plate 12.

According to an embodiment, the metal support portion 1000 and the clad metal 61 are fused through laser welding (e.g., spot welding or wobble welding).

According to an embodiment, through the fusion of the metal support portion 1000 and the clad metal 61, a bonding portion (reference numeral "1201" in FIG. 12) between the metal support portion 1000 and the second metal 612 of the clad metal 61 is configured in a form in which the metallic material of the metal support portion 1000 and the metallic material of the second metal 612 are mixed and bonded so that heat conduction performance between the metal support portion 1000 and the second metal 612 can be ensured, maintained or improved. Through the fusion of the metal support portion 1000 and the clad metal 61, a bonding portion (not separately illustrated) between the first metal 611 and the second metal 612 of the clad metal 61 may be configured in a form in which the metallic material of the first metal 611 and the metallic material of the second metal 612 are mixed and bonded so that heat conduction performance between the first metal 611 and the second metal 612 can be ensured, maintained or improved like the bonding portion 1201 between the metal support portion 1000 and the second metal 612. Through the fusion of the metal support portion 1000 and the clad metal 61, a bonding portion (not separately illustrated) between the first metal 611 and the third metal 613 of the clad metal 61 may be configured in a form in which the metallic material of the first metal 611 and the metallic material of the third metal 613 are mixed and bonded so that heat conduction performance between the first metal 611 and the third metal 613 can be ensured, maintained or improved like the bonding portion 1201 between the metal support portion 1000 and the second metal 1201.

According to an embodiment, when the clad metal 61 and the metal support portion 1000 are coupled by laser welding, the metallic material of the first metal 611 and the metallic material of the second metal 612 are mixed and bonded due to the thermal energy of the laser welding. When the clad metal 61 and the metal support portion 1000 are coupled by laser welding, the metallic material of the first metal 611 and the metallic material of the third metal 613 may be mixed and bonded due to the thermal energy of the laser welding.

According to an embodiment, the first board assembly 34 is at least partially disposed between the clad metal 61 and the rear plate 12.

According to an embodiment, the first board assembly 34 is coupled (e.g. directly or indirectly) to the clad metal 61 through screw fastening or various other mechanical fastening methods.

According to an embodiment, the first board assembly 34 includes a first printed circuit board (or a primary printed circuit board or a main printed circuit board) 1101, a second printed circuit board (or a secondary printed circuit board or a sub-printed circuit board) 1102, a board support portion 1103, a first electromagnetic shield 1110, a second electromagnetic shield 1120, a first electronic component 1131, one or more second electronic components 1132-1 and 1132-2, one or more third electronic components 1133-1, 1133-2, and 1133-3, and/or one or more fourth electronic components 1134-1, 1134-2, and 1134-3.

According to an embodiment, the first printed circuit board 1101 is located closer to the rear plate 12 than the second printed circuit board 1102. The first printed circuit board 1101 may be substantially parallel to the front plate 11 or the rear plate 12.

According to an embodiment, the second printed circuit board 1102 is at least partially located between the first printed circuit board 1101 and the front plate 11. The second printed circuit board 1102 may be substantially parallel to the first printed circuit board 1101. When viewed from above the front plate 11 (e.g., when viewed in the -z axis direction), the second printed circuit board 1102 may at least partially overlap the first printed circuit board 1101.

According to an embodiment, the second printed circuit board 1102 includes or corresponds to the printed circuit board 341 of FIGS. 6 and 7 or the printed circuit board 810 of FIG. 8.

According to an embodiment, the board support portion 1103 is at least partially disposed between the first printed circuit board 1101 and the second printed circuit board 1102. The first printed circuit board 1101 and the second printed circuit board 1102 may be supported on the board support portion 1103 and located to be spaced apart from each other.

According to an embodiment, the first printed circuit board 1101 and the second printed circuit board 1102 are electrically connected to each other.

According to various embodiments, the first board assembly 34 includes an interposer board (not separately illustrated) disposed between the first printed circuit board 1101 and the second printed circuit board 1102. The first printed circuit board 1101 and the second printed circuit board 1102 may be electrically connected to each other via the interposer board. The board support portion 1103 may be omitted. The first printed circuit board 1101 may be defined or interpreted as a "primary printed circuit board (or main printed circuit board)", and the second printed circuit board 1102 may be defined or interpreted as a "secondary printed circuit board (or sub-printed circuit board)". The interposer board may include a plurality of conductive vias (e.g., conductive holes in which connection conductors are disposed) that electrically interconnect the first printed circuit board 1101 and the second printed circuit board 1102.

According to an embodiment, the first electromagnetic shield 1110 is disposed on the second printed circuit board 1102 between the second printed circuit board 1102 and the front plate 11. The first electromagnetic shield 1110 may be mechanically and electrically connected to the second printed circuit board 1102 via a conductive adhesive material (bonding material) (not separately illustrated).

According to an embodiment, the first electromagnetic shield 1110 is electrically connected to a second ground area (e.g., a second ground plane) included in the second printed circuit board 1102.

According to an embodiment, the second electromagnetic shield 1120 is disposed on the first printed circuit board 1101 between the first printed circuit board 1101 and the rear plate 12. The second electromagnetic shield 1120 may be mechanically and electrically connected to the first printed circuit board 1101 via a conductive adhesive material (bonding material) (not separately illustrated).

According to an embodiment, the second electromagnetic shield 1120 is electrically connected to a first ground area (e.g., a first ground plane) included in the first printed circuit board 1101.

According to an embodiment, the first ground area (not separately illustrated) of the first printed circuit board 1101 and the second ground area (not separately illustrated) of the second printed circuit board 1102 are electrically connected to each other.

According to an embodiment, the first electronic component 1131 and/or the one or more second electronic components 1132-1 and 1132-2 are disposed on the second printed circuit board 1102 between the second printed circuit board 1102 and the front plate 11.

According to an embodiment, the one or more third electronic components 1133-1, 1133-2, and 1133-3 are disposed on the second printed circuit board 1102 between the first printed circuit board 1101 and the second printed circuit board 1102.

According to an embodiment, the one or more fourth electronic components 1134-1, 1134-2, and 1134-3 are disposed on the first printed circuit board 1101 between the first printed circuit board 1101 and the rear plate 12.

According to an embodiment, the first electromagnetic shield 1110 at least partially covers the first electronic component 1131 and the one or more second electronic components 1132-1 and 1132-2. The first electronic component 1131 and the one or more second electronic components 1132-1 and 1132-2 may be disposed on the second printed circuit board 1102 in the space between the first electromagnetic shield 1110 and the second printed circuit board 1102.

According to an embodiment, the first electromagnetic shield 1110 includes a first conductive wall 1111 and a first conductive cover plate 1112 disposed on (or coupled to) the first conductive wall 1111. The first conductive wall 1111 may be provided (or configured) to be substantially the same as or at least partially similar to the conductive wall 831 of FIG. 8. The first conductive cover plate 1112 may be provided (or configured) to be substantially the same as or similar to the conductive cover plate 832 of FIG. 8.

According to an embodiment, the second electromagnetic shield 1120 at least partially covers the one or more fourth electronic components 1134-1, 1134-2, and 1134-3. The one or more fourth electronic components 1134-1, 1134-2, and 1134-3 may be disposed on the first printed circuit board 1101 in the space between the second electromagnetic shield 1120 and the first printed circuit board 1101.

According to an embodiment, the second electromagnetic shield 1120 includes a second conductive wall 1121 and a second conductive cover plate 1122 disposed on (or coupled to) the second conductive wall 1121. The second conductive wall 1121 may be provided (or configured) to be substantially the same as or at least partially similar to the conductive wall 831 of FIG. 8. The second conductive cover plate 1122 may be provided (or configured) to be substantially the same as or similar to the conductive cover plate 832 of FIG. 8.

According to an embodiment, the at least one flexible conductor (or a flexible conductive portion or a flexible conductive member) 1140 is disposed between the clad metal 61 and the first electromagnetic shield 1110. The clad metal 61 and the first electromagnetic shield 1110 may be electrically connected to each other via the at least one flexible conductor 1140. The at least one flexible conductor 1140 may include, for example, a conductive clip (e.g., a conductive structure including an elastic structure), a pogo pin, a spring, conductive Poron, conductive sponge, conductive rubber, conductive tape, or a conductive connector.

According to an embodiment, the at least one flexible conductor 1140 is disposed between the second metal 612 of the clad metal 61 and the first conductive cover plate 1112 of the first electromagnetic shield 1110.

According to an embodiment, the metal plate 1150 is at least partially located between the first board assembly 34 (or the first printed circuit board 1101) and the rear plate 12.

According to an embodiment, the metal plate 1150 is located between the first board assembly 34 and the second support portion 32 of FIG. 2.

According to various embodiments, the metal plate 1150 includes at least a portion of the second support portion 32 of FIG. 2.

According to an embodiment, the first heat radiation sheet 1160 is at least partially located between the display module 201 and the clad metal 61.

According to an embodiment, heat emitted from the display module 201 is transferred to the first heat radiation sheet 1160.

According to an embodiment, heat transferred from the display module 201 to the first heat radiation sheet 1160 is transferred to the clad metal 61 through indirect heat conduction or direct heat conduction.

According to an embodiment, the first heat radiation sheet 1160 includes a graphite sheet. The first heat radiation sheet 1160 may be formed of various other materials.

According to an embodiment, the second heat radiation sheet 1170 is at least partially located between the metal plate 1150 and the rear plate 12. The second heat radiation sheet 1170 may be disposed on (or coupled to), for example, the rear plate 12.

According to an embodiment, heat emitted from the first electronic component 1131 (e.g., the electronic component 342 in FIG. 7 or the first electronic component 821 in FIG. 8) is transferred to the first metal 611 of the clad metal 61 via the first heat conductor 1181 (e.g., the first heat conductor 71 in FIG. 7) and the second heat conductor 1182 (e.g., the second heat conductor 72 in FIG. 7).

According to an embodiment, the first heat conductor 1181 is at least partially disposed between the first electronic component 1131 and the first metal 611 of the clad metal 61. The second heat conductor 1182 may be at least partially disposed between the first electronic component 1131 and the first heat conductor 1181. The combination of the first heat conductor 1181 and the second heat conductor 1182 may be located in the opening 6121 provided (or defined) in the second metal 612 of the clad metal 61. The combination of the first heat conductor 1181 and the second heat conductor 1182 may thermally interconnect the first electronic component 1131 and the clad metal 61.

According to an embodiment, the opening 6121 in the second metal 612 is provided by removing a portion of the second metal 612 corresponding to the space between the first metal 611 and the first electronic component 1131 to thermally connect the first metal 611, which has a better thermal conductivity property than the second metal 612, to the first electronic component 1131.

According to an embodiment, the first heat conductor 1181 is located in the opening 6121 of the second metal 612 to reduce the separation space between the first electronic component 1131 and the first metal 611 of the clad metal 61.

According to an embodiment, the thermal conductivity of the first heat conductor 1181 is higher than the second thermal conductivity of the second metallic material (e.g., stainless steel) of the second metal 612.

According to an embodiment, the thermal conductivity of the first heat conductor 181 is substantially the same as or higher than the first thermal conductivity of the first metallic material (e.g., copper) of the first metal 611.

According to an embodiment, the first heat conductor 1181 includes the same metallic material (e.g., copper) as the first metal 611 of the clad metal 61.

According to some embodiments, the first heat conductor 1181 includes a metallic material different from the first metal 611 and the second metal 612 (or the third metal 613) of the clad metal 61.

According to various embodiments, the thermal conductivity of the first heat conductor 1181 may be lower than the first thermal conductivity of the first metallic material (e.g., copper) of the first metal 611 and may be higher than the second thermal conductivity of the second metallic material (e.g., stainless steel) of the second metal 612.

According to an embodiment, the first heat conductor 1181 is disposed on (or coupled to) the first metal 611 of the clad metal 61.

According to an embodiment, in order to suppress the deterioration in heat conduction performance between the first metal 611 and the first heat conductor 1181, the bonding portion or the interface between the first metal 611 and the first heat conductor 1181 is configured such that the air gaps are reduced or not included between the first metal 611 and the first heat conductor 1181.

According to an embodiment, the bonding portion between the first metal 611 and the first heat conductor 1181 is configured in the form in which the metallic material of the first metal 611 and the metallic material of the first heat conductor 1181 are mixed and bonded through fusion so that heat conduction performance between the first metal 611 and the first heat conductor 1181 can be ensured or improved.

According to an embodiment, the second heat conductor 1182 includes thermal grease, thermal paste, thermal compound, or TIM such as HTP. In order to suppress the deterioration in heat transfer performance, the TIM may be in close contact with the first electronic component 1131 and the first heat conductor 1181 to reduce air gaps or bubbles between the first electronic component 1131 and the first heat conductor 1181.

According to some embodiments, although not separately illustrated, when the distance between the first electronic component 1131 and the first metal 611 of the clad metal 61 is close unlike the illustrated example, the first heat conductor 1181 is omitted. The second heat conductor 1182 may thermally interconnect the first electronic component 1131 and the first metal 611. Heat emitted from the first electronic component 1131 may be transferred to the first metal 611 via the second heat conductor 1182.

According to some embodiments, although not separately illustrated, heat emitted from the first electronic component 1131 is transferred to the clad metal 61 through the scheme of direct heat conduction. The first heat conductor 1181 and the second heat conductor 1182 may be omitted. Heat emitted from the first electronic component 1131 may be transferred to the clad metal 61 through direct (or physical) contact between the first electronic component 1131 and the clad metal 61.

According to an embodiment, heat emitted from the one or more second electronic components 1132-1 and 1132-2 (e.g., the one or more second electronic components 822, 823, 824, and 825 in FIG. 8) is transferred to the clad metal 61 via the first electromagnetic shield 1110 (e.g., the electromagnetic shield 830 in FIG. 8).

According to an embodiment, heat emitted from the one or more second electronic components 1132-1 and 1132-2 is transferred to the first electromagnetic shield 1110 through indirect heat conduction. The one or more second electronic components 1132-1 and 1132-2 may be in indirect contact with the first conductive cover plate 1112 of the first electromagnetic shield 1110.

According to an embodiment, the one or more third heat conductors 1183-1 and 1183-2, such as TIM, are disposed between the one or more second electronic components 1132-1 and 1132-2 and the first conductive cover plate 1112 of the first electromagnetic shield 1110 and may thermally interconnect the one or more second electronic components 1132-1 and 1132-2 and the first conductive cover plate 1112. Heat emitted from the one or more second electronic components 1132-1 and 1132-2 may be transferred to the first electromagnetic shield 1110 via the one or more third heat conductors 1183-1 and 1183-2.

According to some embodiments, heat emitted from the one or more second electronic components 1132-1 and 1132-2 is transferred to the first electromagnetic shield 1110 through direct heat conduction. The one or more third heat conductors 1183-1 and 1183-2 may be omitted. The one or more second electronic components 1132-1 and 1132-2 may be in indirect (or physical) contact with the first conductive cover plate 1112 of the first electromagnetic shield 1110.

According to an embodiment, heat transferred from the one or more second electronic components 1132-1 and 1132-2 to the first electromagnetic shield 1110 is transferred to the metal support portion 1000 through indirect heat conduction. The first conductive cover plate 1112 of the first electromagnetic shield 1110 may be in indirect contact with the metal support portion 1000.

According to an embodiment, the one or more fourth heat conductors 1184-1 and 1184-2, such as TIM, are disposed between the metal support portion 1000 and the first conductive cover plate 1112 of the first electromagnetic shield 1110 and may thermally interconnect the metal support portion 1000 and the first conductive cover plate 1112. Heat transferred from the one or more second electronic components 1132-1 and 1132-2 to the first electromagnetic shield 1110 may be transferred to the metal support portion 1000 via the one or more fourth heat conductors 1184-1 and 1184-2.

According to some embodiments, heat transferred from the one or more second electronic components 1132-1 and 1132-2 to the first electromagnetic shield 1110 is transferred to the metal support portion 1000 through direct heat conduction. The one or more fourth heat conductors 1184-1 and 1184-2 may be omitted. The first conductive cover plate 1112 of the first electromagnetic shield 1110 may be in direct (or physical) contact with the metal support portion 1000.

According to an embodiment, heat transferred from the first electromagnetic shield 1110 to the metal support portion 1000 is transferred from the metal support portion 1000 to the clad metal 61.

According to some embodiments, heat transferred from the one or more second electronic components 1132-1 and 1132-2 to the first electromagnetic shield 1110 is configured to be indirectly or directly transferred to the clad metal 61 without the mediation of the metal support portion 1000 (not separately illustrated).

According to an embodiment, heat emitted from the one or more fourth electronic components 1134-1, 1134-2, and 1134-3 is transferred to the second electromagnetic shield 1120 through indirect heat conduction. The one or more fourth electronic components 1134-1, 1134-2, and 1134-3 may be in indirect contact with the second conductive cover plate 1122 of the second electromagnetic shield 1120.

According to an embodiment, the one or more fifth heat conductors 1185-1, 1185-2 and 1185-3, such as TIM, are disposed between the one or more fourth electronic components 1134-1, 1134-2, and 1134-3 and the second conductive cover plate 1122 of the second electromagnetic shield 1120 and may thermally interconnect the one or more fourth electronic components 1134-1, 1134-2, and 1134-3 and the second conductive cover plate 1122. Heat emitted from the one or more fourth electronic components 1134-1, 1134-2, and 1134-3 may be transferred to the second electromagnetic shield 1120 via the one or more fifth heat conductors 1185-1, 1185-2, and 1185-3.

According to some embodiments, heat emitted from the one or more fourth electronic components 1134-1, 1134-2, and 1134-3 is transferred to the second electromagnetic shield 1120 through direct heat conduction. The one or more fifth heat conductors 1185-1, 1185-2, and 1185-3 may be omitted. The one or more fourth electronic components 1134-1, 1134-2, and 1134-3 may be in direct (or physical) contact with the second conductive cover plate 1122 of the second electromagnetic shield 1120.

According to an embodiment, heat transferred from the one or more fourth electronic components 1134-1, 1134-2, and 1134-3 to the second electromagnetic shield 1120 is transferred to the metal plate 1150 through direct heat conduction or indirect heat conduction.

According to an embodiment, heat transferred from the second electromagnetic shield 1120 to the metal plate 1150 is transferred to the second heat radiation sheet 1170 through direct heat conduction or indirect heat conduction.

According to an embodiment, the second heat radiation sheet 1170 is configured to ensure the antenna radiation performance of at least one antenna radiator (not separately illustrated) disposed inside the electronic device 1. The at least one antenna radiator may be configured to receive electromagnetic waves from the outside of the electronic device 1 to transmit the electromagnetic waves to the outside of the electronic device 1 through the rear surface 10B of the electronic device 1. The second heat radiation sheet 1170 may be made of various materials in consideration of the facts that as the dielectric constant decreases, it is easier to ensure the radiation performance of the antenna radiator, and that as the thermal conductivity increases, the heat radiation efficiency increases.

According to an embodiment, the second heat radiation sheet 1170 is a low-k heat radiation sheet. The low-k heat radiation sheet may refer to a heat radiation sheet having a dielectric constant (relative dielectric constant) of about 4 or less, which does not substantially affect antenna radiation performance. The low-k heat radiation sheet may refer to a sheet having a thermal conductivity of about 10 W/mK or more.

According to an embodiment, the low-k heat radiation sheet is formed in various ways based on ceramic materials. For example, the ceramic materials may include boron nitride (BN) (having a thermal conductivity of 60 W/mK and a dielectric constant of 3.9), aluminum nitride (AlN) (having a thermal conductivity of 200 W/mK and a dielectric constant of 8.5), beryllium oxide (BeO) (having a thermal conductivity of 340 W/mK and a dielectric constant of 6.8), alumina (Al₂O₃) (having a thermal conductivity of 36 W/mK and a dielectric constant of 9.5), or silicon carbide (SiC) (having a thermal conductivity of 270 W/mK and a dielectric constant of 40). Various other ceramic materials may be used in the low-k heat radiation sheet.

According to various embodiments, the low-k heat radiation sheet is a polymer sheet based on ceramic fillers (e.g., BN, AIN, and Al₂O₃).

According to various embodiments, the low-k heat radiation sheet is formed by processing ceramic raw materials (e.g., BN, AlN, and Al₂O₃) into a sheet form.

According to various embodiments, the low-k heat radiation sheet is a sheet using a low-k coating filler. For example, the low-k heat radiation sheet may be formed by coating a material with a high dielectric constant with a material with a low dielectric constant to lower the dielectric constant.

According to various embodiments, the low-k heat radiation sheet is formed by combining about boron nitride (BN) with a relative dielectric constant of 4 and a rubber binder with a relative dielectric constant of 2 in a ratio of about 90% to about 10%.

According to various embodiments, low-k heat radiation sheets based on other materials are provided.

According to an embodiment, when there is at least one antenna radiator (not separately illustrated) configured to receive electromagnetic waves from the outside of the electronic device 1 to transmit the electromagnetic waves to the outside of the electronic device 1 through the front surface 10A of the electronic device 1, the first heat radiation sheet 1160 or the lower layer 2013c of the display module 201 is configured to ensure the antenna radiation performance of the at least one antenna radiator. The first heat radiation sheet 1160 may be made of various materials in consideration of the facts that as the dielectric constant decreases, it is easier to ensure the radiation performance of the antenna radiator, and that as the thermal conductivity increases, the heat radiation efficiency increases. The first heat radiation sheet 1160 may include, for example, a low-k heat radiation sheet.

According to an embodiment, the sixth heat conductor 1186 is disposed (e.g., filled) between the first printed circuit board 1101 and the second printed circuit board 1102. Heat emitted from the one or more third electronic components 1133-1, 1133-2, and 1133-3 may be transferred to the sixth heat conductor 1186.

According to an embodiment, heat transferred from the one or more third electronic components 1133-1, 1133-2, and 1133-3 to the sixth heat conductor 1186 is transferred to the periphery of the sixth heat conductor 1186.

According to an embodiment, the above-described heat radiation structure of the electronic device 1 includes convective heat transfer, which is a scheme of transferring thermal energy between a solid surface and gas, between any component and the surrounding air.

According to various embodiments, although not separately illustrated, the above-described one or more components may be omitted, or one or more other components may be added, and the heat radiation structure for these components may be configured in various ways.

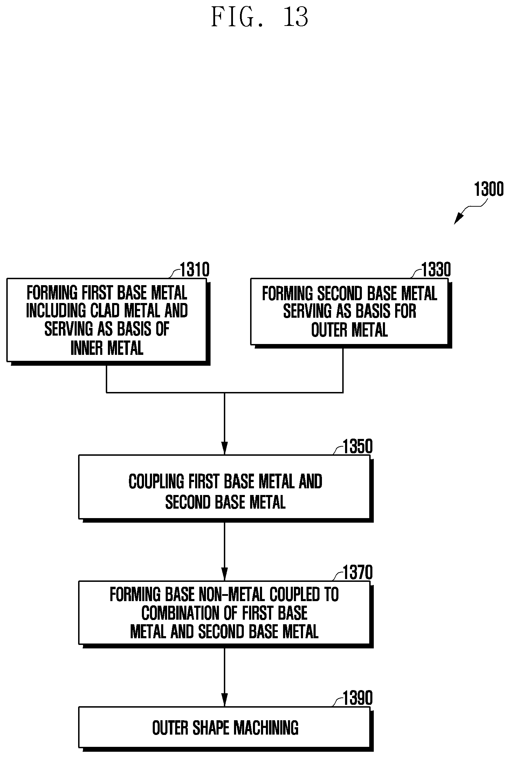

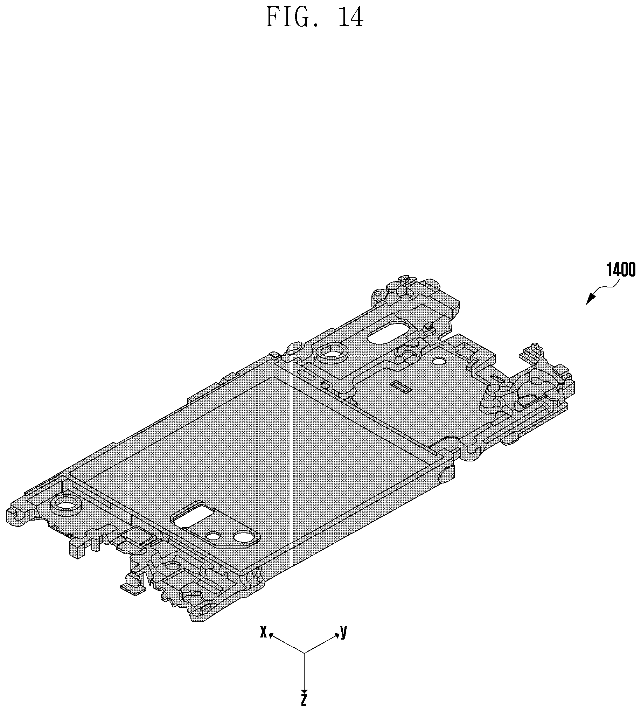

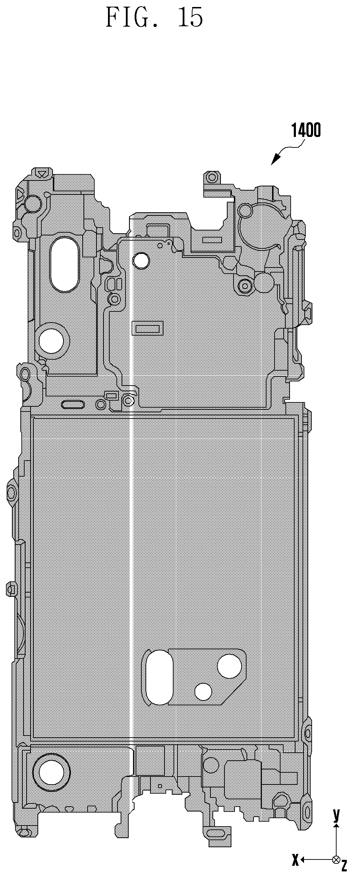

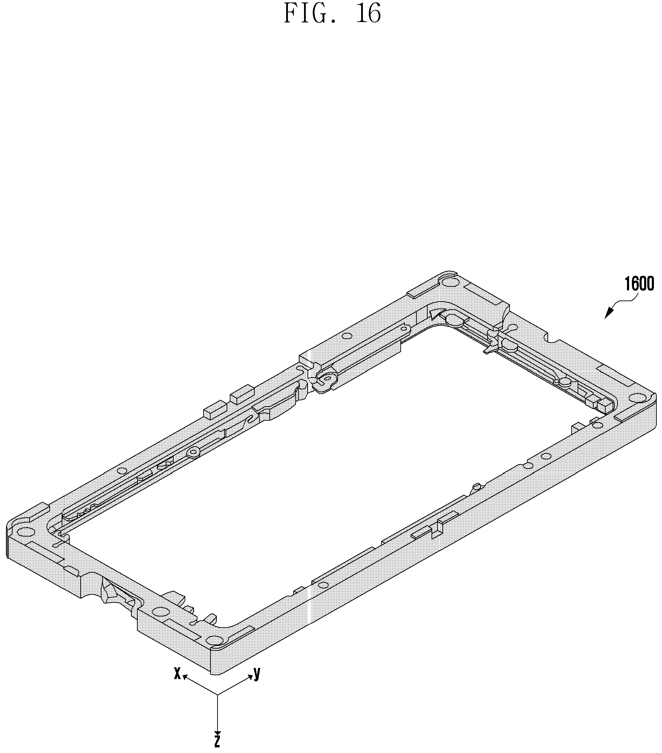

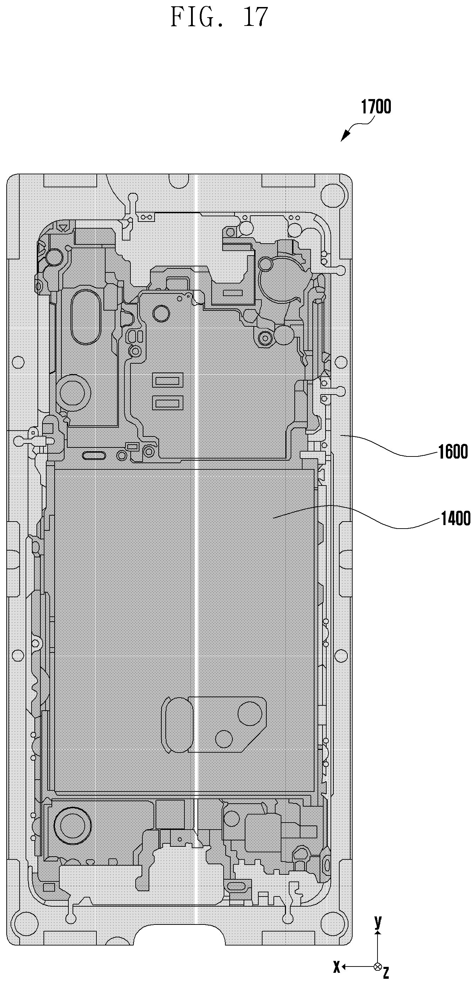

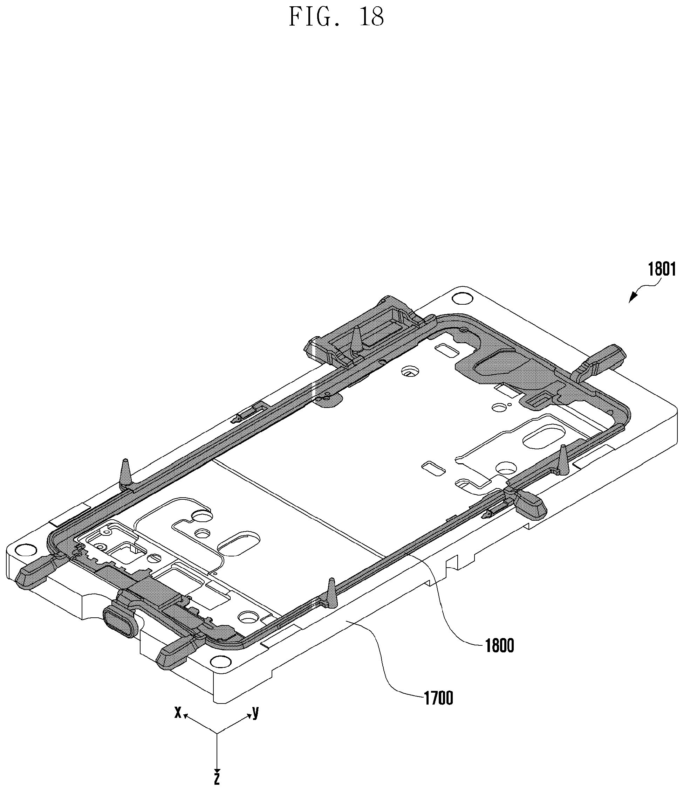

FIG. 13 is a manufacturing flowchart 1300 for the frame 4 according to an embodiment of the disclosure. FIG. 14 is a perspective view of a first base metal 1400 according to an embodiment of the disclosure. FIG. 15 is a view illustrating the first base metal 1400 according to an embodiment of the disclosure. FIG. 16 is a perspective view of a second base metal 1600 according to an embodiment of the disclosure. FIG. 17 is a view illustrating a combination of the first base metal 1400 and the second base metal 1600 (e.g., a base metal assembly 1700) according to an embodiment of the disclosure. FIG. 18 is a perspective view of a combination of the base metal assembly 1700 and a base non-metal 1800 (e.g., a base metal-non-metal assembly 1801) according to an embodiment of the disclosure. It is to be understood at the present disclosure envisages and includes all combinations of features and/or embodiments disclosed in relation to FIGS. 13, 14, 15, 16, 17 and 18. That is, every combination of the features described below in relation to FIGS. 13, 14, 15, 16, 17 and 18 should be considered as included in the present disclosure as a specific example.

Referring to FIGS. 13, 14, and 15, in an embodiment, at operation 1310, a first base metal 1400, which includes a clad metal and serves as the basis for an inner metal (e.g., the inner metal C in FIGS. 4 and 5), may be formed.

According to an embodiment, the first base metal 1400 is formed through a processing method such as computer numerical control (CNC), casting, or pressing of the clad metal.

Referring to FIGS. 13 and 16, in an embodiment, at operation 1330, the second base metal 1600, which serves as the basis of the outer metal (e.g., the outer metal A in FIGS. 4 and 5), is formed.

According to an embodiment, the second base metal 1600 is formed through a processing method such as CNC, casting, or pressing.

Referring to FIGS. 13 and 17, in an embodiment, at operation 1350, the first base metal 1400 and the second base metal 1600 are coupled to form a base metal assembly 1700.

According to an embodiment, the first base metal 1400 and the second base metal 1600 are coupled through laser welding.

According to an embodiment, the first base metal 1400 and the second base metal 1600 are coupled via a plurality of holes 91-1, 91-2, ..., 91-N (see FIG. 9) and a plurality of poles 92-1, 92-2, ..., 92-N (see FIG. 9).

According to various embodiments, the second base metal 1600 is provided in a form that further includes a metal support structure (or a metal support) (not separately illustrated) which serves as a basis for a metal support portion 1000 (see FIG. 10). The metal support structure may help to stably place the first base metal 1400 on the second base metal 1600 when the first base metal 1400 and the second base metal 1600 are coupled.

Referring to FIGS. 13 and 18, in an embodiment, at operation 1370, a base non-metal 1800 coupled to the base metal assembly 1700 (e.g., a combination of the first base metal 1400 and the second base metal 1600) is formed.

According to an embodiment, the base non-metal 1800 serves as a basis for the outer non-metal B and the inner non-metal D of FIGS. 4 and 5.

According to an embodiment, the base non-metal 1800 is formed through injection molding (e.g., insert injection molding of polycarbonate).

According to an embodiment, at operation 1390, outer shape machining is performed on the base metal-non-metal assembly 1801 formed through operation 1370. The frame 4 of FIGS. 4 and 5 may be substantially formed through the outer shape machining.

According to an embodiment, the outer shape machining at the 1390 operation may include CNC.

According to an exemplary embodiment of the disclosure, an electronic device 1 includes a front plate 11, a rear plate 12, a side 13, and a support portion (e.g., a first support portion 31). The front plate 11 provides (or defines) at least a portion of the front surface 10A of the electronic device 1. The rear plate 12 provides (or defines) at least a portion of the rear surface 10B of the electronic device 1. The side 13 provides (or defines) at least a portion of the side surface 10C of the electronic device 1. The support portion is located between the front plate 11 and the rear plate 12 and is connected to the side 13. The support portion includes a clad metal 61.

According to an exemplary embodiment of the disclosure, the side 13 includes a plurality of holes 91-1, 91-2, ..., 91-N. The clad metal 61 may include a plurality of poles 92-1, 92-2, ..., 92-N fixedly inserted into the plurality of holes 91-1, 91-2, ..., 91-N.

According to an exemplary embodiment of the disclosure, the electronic device 1 further includes at least one electronic component (e.g., the electronic component 342) located inside the electronic device 1. Heat emitted from the at least one electronic component 342 may be transferred to the clad metal 61.

According to an exemplary embodiment of the disclosure, the clad metal 61 includes a first metal 611 and a second metal 612 stacked on the first metal 611. The second metal 612 may include an opening 6121. The at least one electronic component (e.g., electronic component 342) may be in direct or indirect contact with the first metal 611 through the opening 6121.

According to an exemplary embodiment of the disclosure, the first metal 611 has a higher thermal conductivity than the second metal 612.

According to an exemplary embodiment of the disclosure, when the at least one electronic component (e.g., the electronic component 342) is in indirect contact with the first metal 611 through the opening 6121 in the second metal 612, at least one heat conductor (e.g., the first heat conductor 71 and/or the second heat conductor 72) is disposed between the at least one electronic component and the first metal 611. The at least one heat conductor may have a higher thermal conductivity than the second metal 612.

According to an exemplary embodiment of the disclosure, the second metal 612 has greater strength than the first metal 611.

According to an exemplary embodiment of the disclosure, the first metal 611 may include copper, and the second metal 612 includes stainless steel.

According to an exemplary embodiment of the disclosure, the clad metal 61 further includes a third metal 613 stacked on the first metal 611. The first metal 611 may be at least partially disposed between the second metal 612 and the third metal 613.

According to an exemplary embodiment of the disclosure, the first metal 611 has a higher thermal conductivity than the second metal 612 and the third metal 613. The second metal 612 and the third metal 613 may have greater strength than the first metal 611.

According to an exemplary embodiment of the disclosure, the electronic device 1 further includes a printed circuit board 341 on which the at least one electronic component (e.g., the electronic component 342) is disposed. The electronic device 1 may further include an electromagnetic shield 830 disposed on the printed circuit board 341 to at least partially surround the at least one electronic component. The at least one electronic component may be in direct or indirect contact with the clad metal 61 through an opening 8321 in the electromagnetic shield 830.

According to an exemplary embodiment of the disclosure, the electromagnetic shield 830 is thermally connected to the clad metal 61.

According to an embodiment of the disclosure, the electronic device 1 further includes a metal support portion 1000 extending from or connected to the side 13. The metal support portion 1000 may be located between the front plate 11 and the rear plate 12. The metal support portion 1000 may overlap the clad metal 61 when viewed from above on the front surface 10A of the electronic device 1. The metal support portion 1000 and the clad metal 61 may be coupled to each other through fusion.

According to an exemplary embodiment of the disclosure, the side 13 includes an outer metal A. The support portion (e.g., the first support portion 31) may include an inner metal C including the clad metal 61. The outer metal A and the inner metal C may be connected to each other through fusion.

According to an exemplary embodiment of the disclosure, the electronic device 1 further includes a display module 201 located between the support portion 31 and the front plate 11. The display module 201 may be visually visible through the front plate 11. Heat emitted from the display module 201 may be transferred to the clad metal 61.

According to an exemplary embodiment of the disclosure, an electronic device 1 includes a front plate 11, a rear plate 12, a side 13, a support portion (e.g., the first support portion 31), and at least one electronic device (e.g., the electronic component 342). The front plate 11 provides at least a portion of the front surface 10A of the electronic device 1. The rear plate 12 provides at least a portion of the rear surface 10B of the electronic device 1. The side 13 provides at least a portion of the side surface 10C of the electronic device 1. The support portion is located between the front plate 11 and the rear plate 12 and is connected to the side. The support portion includes a clad metal 61. The heat emitted from the at least one electronic component is transferred to the clad metal 61.

According to an exemplary embodiment of the disclosure, the clad metal 61 includes a first metal 611 and a second metal 612 stacked on the first metal 611. The second metal 612 may include an opening 6121. The at least one electronic component (e.g., electronic component 342) may be in direct or indirect contact with the first metal 611 through the opening 6121.

According to an exemplary embodiment of the disclosure, when the at least one electronic component (e.g., the electronic component 342) is in indirect contact with the first metal 611 through the opening 6121 in the second metal 612, at least one heat conductor (e.g., the first heat conductor 71 and/or the second heat conductor 72) is disposed between the at least one electronic component and the first metal 611. The at least one heat conductor may have a higher thermal conductivity than the second metal 612.

According to an exemplary embodiment of the disclosure, the side 13 includes an outer metal A. The support portion (e.g., the first support portion 31) may include an inner metal C including the clad metal 61. The outer metal A and the inner metal C may be connected to each other through fusion.

According to an exemplary embodiment of the disclosure, an electronic device 1 includes a front plate 11, a rear plate 12, a side 13, a support portion (e.g., the first support portion 31), and at least one electronic device (e.g., the electronic component 342). The front plate 11 provides at least a portion of the front 10A of the electronic device 1. The rear plate 12 provides at least a portion of the rear surface 10B of the electronic device 1. The side 13 provides at least a portion of the side surface 10C of the electronic device 1. The support portion is located between the front plate 11 and the rear plate 12 and is connected to the side 13. The support portion 31 includes a clad metal 61. The heat emitted from the at least one electronic component is transferred to the clad metal 61. The clad metal 61 includes a first metal 611 and a second metal 612 stacked on the first metal 611. The first metal 611 has a higher thermal conductivity than the second metal 612. The second metal 612 includes an opening 6121. The at least one electronic component is in direct or indirect contact with the first metal 611 through the opening 6121.

The embodiments of the disclosure described and shown in the specification and the drawings are merely specific examples that have been presented to easily explain the technical contents of the disclosure and help understanding of the disclosure, and are not intended to limit the scope of the disclosure. Therefore, the scope of various embodiments of the disclosure should be construed to include, in addition to the embodiments set forth herein, all changes and modifications derived on the basis of the technical idea of the disclosure. Additionally, any embodiment(s) set forth herein may be used with any other embodiment(s) set forth herein. In particular, it is stressed that, although the present disclosure has been presented in a form in which a number of embodiments each defining a number of features are provided, where some of these embodiments are linked only through referring to the same figure or figures, the present disclosure should be understood to include all combinations of these embodiments, unless there is a clear contradiction between two (or more) embodiments. In other words, where features are presented as optional herein, all combinations of such optional features are included in this disclosure.

## Claims

1. An electronic device (1) comprising:
a front plate (11) configured to form at least a portion of a front surface (10A) of the electronic device (1);
a rear plate (12) configured to form at least a portion of a rear surface (10B) of the electronic device (1);
a side member (13) configured to form at least a portion of a side surface (10C) of the electronic device (1);
a support portion (31) located between the front plate (11) and the rear plate (12), wherein the support portion (31) is connected to the side member (13) and comprises a clad metal (61);
at least one electronic component (342) located between the front plate (11) and the rear plate (12), and
at least one heat conductor (71, 72) disposed between the at least one electronic component (342) and the clad metal (61);
wherein the clad metal (61) comprises a first metal layer (611) and a second metal layer (612), wherein the first metal layer (611) has a higher thermal conductivity than the second metal layer (612),
wherein the second metal layer (612) includes an opening (6121),
wherein the at least one heat conductor (71, 72) is disposed between the at least one electronic component (342) and the first metal layer (611) through the opening (6121) of the second metal layer (612) such that heat from the at least one electronic component (342) is transferred to the first metal layer (611) through the at least one heat conductor (71, 72); and
wherein the at least one heat conductor (71, 72) has a higher thermal conductivity than the second metal layer (612).

2. The electronic device of claim 1, wherein the second metal (612) has greater strength than the first metal (611).

3. The electronic device of any one of claims 1 to 2, wherein the first metal (611) comprises copper, and the second metal (612) comprises stainless steel.

4. The electronic device of any one of claims 1 to 3, wherein the clad metal (61) further comprises a third metal (613) arranged on the first metal (611), and
wherein the first metal (611) is at least partially disposed between the second metal (612) and the third metal (613).

5. The electronic device of claim 4, wherein the first metal (611) has a higher thermal conductivity than the second metal (612) and the third metal (613), and/or
wherein the second metal (612) and the third metal (613) have greater strength than the first metal (611).

6. The electronic device of any one of claims 1 to 5, wherein the side member (13) comprises a plurality of holes (91-1, 91-2, ..., 91-N), and
wherein the clad metal (61) comprises a plurality of protrusions (92-1, 92-2, ..., 92-N) inserted into the plurality of holes (91-1, 91-2, ..., 91-N) to connect the support portion (31) to the side (13).

7. The electronic device of any one of claims 1 to 6, further comprising:
a printed circuit board (341) on which the at least one electronic component (342) is disposed; and
an electromagnetic shield (830) disposed on the printed circuit board (341) to at least partially surround the at least one electronic component (342),
wherein the at least one electronic component (342) is in direct or indirect contact with the clad metal (61) through an opening (8321) in the electromagnetic shield (830).

8. The electronic device of claim 7, wherein the electromagnetic shield (830) is thermally connected to the clad metal (61).

9. The electronic device of any one of claims 1 to 8, wherein:
the side member (13) includes a first outer metal portion (A1) and a second outer metal portion (A4) spaced apart from each other;
the electronic device further comprises a metal support portion (1000) connecting the first outer metal portion (A1) and the second outer metal portion (A4), the metal support portion (1000) configured to overlap the clad metal (61) of the support portion when viewed from above the front plate (11), and
the metal support portion (1000) and the clad metal (61) are coupled to each other through fusion.

10. The electronic device of any one of claims 1 to 9, wherein:
the side member (13) comprises an outer metal (A),
the support portion (31) comprises an inner metal (C) comprising the clad metal (61), and
the outer metal (A) and the inner metal (C) are connected to each other through fusion.

11. The electronic device of any one of claims 1 to 10, wherein the at least one electronic component comprises a display module (201) located between the support portion (31) and the front plate (11) and visually visible through the front plate (11).

## Patentansprüche

1. Elektronische Vorrichtung (1), umfassend:
eine vordere Platte (11), die so konfiguriert ist, dass sie mindestens einen Abschnitt einer vorderen Oberfläche (10A) der elektronischen Vorrichtung (1) bildet;
eine hintere Platte (12), die so konfiguriert ist, dass sie mindestens einen Abschnitt einer hinteren Oberfläche (10B) der elektronischen Vorrichtung (1) bildet;
ein Seitenelement (13), das so konfiguriert ist, dass es mindestens einen Abschnitt einer seitlichen Oberfläche (10C) der elektronischen Vorrichtung (1) bildet;
einen Trägerabschnitt (31), der sich zwischen der vorderen Platte (11) und der hinteren Platte (12) befindet, wobei der Trägerabschnitt (31) mit dem Seitenelement (13) verbunden ist und ein plattiertes Metall (61) umfasst;
mindestens ein elektronisches Bauteil (342), das sich zwischen der vorderen Platte (11) und der hinteren Platte (12) befindet, und
mindestens einen Wärmeleiter (71, 72), der zwischen dem mindestens einen elektronischen Bauteil (342) und dem plattierten Metall (61) angeordnet ist;
wobei das plattierte Metall (61) eine erste Metallschicht (611) und eine zweite Metallschicht (612) umfasst, wobei die erste Metallschicht (611) eine höhere Wärmeleitfähigkeit aufweist als die zweite Metallschicht (612),
wobei die zweite Metallschicht (612) eine Öffnung (6121) beinhaltet,
wobei der mindestens eine Wärmeleiter (71, 72) zwischen dem mindestens einen elektronischen Bauteil (342) und der ersten Metallschicht (611) durch die Öffnung (6121) der zweiten Metallschicht (612) angeordnet ist, sodass Wärme von dem mindestens einen elektronischen Bauteil (342) durch den mindestens einen Wärmeleiter (71, 72) auf die erste Metallschicht (611) übertragen wird; und
wobei der mindestens eine Wärmeleiter (71, 72) eine höhere Wärmeleitfähigkeit als die zweite Metallschicht (612) aufweist.

2. Elektronische Vorrichtung nach Anspruch 1, wobei das zweite Metall (612) eine höhere Festigkeit als das erste Metall (611) aufweist.

3. Elektronische Vorrichtung nach einem der Ansprüche 1 bis 2, wobei das erste Metall (611) Kupfer umfasst und das zweite Metall (612) Edelstahl umfasst.

4. Elektronische Vorrichtung nach einem der Ansprüche 1 bis 3, wobei das plattierte Metall (61) ferner ein drittes Metall (613) umfasst, das auf dem ersten Metall (611) angeordnet ist, und wobei das erste Metall (611) mindestens teilweise zwischen dem zweiten Metall (612) und dem dritten Metall (613) angeordnet ist.

5. Elektronische Vorrichtung nach Anspruch 4, wobei das erste Metall (611) eine höhere Wärmeleitfähigkeit als das zweite Metall (612) und das dritte Metall (613) aufweist und/oder wobei das zweite Metall (612) und das dritte Metall (613) eine höhere Festigkeit als das erste Metall (611) aufweisen.

6. Elektronische Vorrichtung nach einem der Ansprüche 1 bis 5, wobei das Seitenelement (13) eine Vielzahl von Löchern (91-1, 91-2, ..., 91-N) umfasst und
wobei das plattierte Metall (61) eine Vielzahl von Vorsprüngen (92-1, 92-2, ..., 92-N) umfasst, die in die Vielzahl von Löchern (91-1, 91-2, ..., 91-N) eingesetzt sind, um den Trägerabschnitt (31) mit der Seite (13) zu verbinden.

7. Elektronische Vorrichtung nach einem der Ansprüche 1 bis 6, ferner umfassend:
eine Leiterplatte (341), auf der das mindestens eine elektronische Bauteil (342) angeordnet ist; und
eine elektromagnetische Abschirmung (830), die auf der Leiterplatte (341) angeordnet ist, um das mindestens eine elektronische Bauteil (342) mindestens teilweise zu umgeben,
wobei das mindestens eine elektronische Bauteil (342) durch eine Öffnung (8321) in der elektromagnetischen Abschirmung (830) in direktem oder indirektem Kontakt mit dem plattierten Metall (61) ist.

8. Elektronische Vorrichtung nach Anspruch 7, wobei die elektromagnetische Abschirmung (830) thermisch mit dem plattierten Metall (61) verbunden ist.

9. Elektronische Vorrichtung nach einem der Ansprüche 1 bis 8, wobei:
das Seitenelement (13) einen ersten äußeren Metallabschnitt (A1) und einen zweiten äußeren Metallabschnitt (A4) beinhaltet, die voneinander beabstandet sind;
die elektronische Vorrichtung ferner einen Metallträgerabschnitt (1000) umfasst, der den ersten äußeren Metallabschnitt (A1) und den zweiten äußeren Metallabschnitt (A4) verbindet, wobei der Metallträgerabschnitt (1000) so konfiguriert ist, dass er das plattierte Metall (61) des Trägerabschnittes überlappt, wenn von oberhalb der vorderen Platte (11) betrachtet, und
der Metallträgerabschnitt (1000) und das plattierte Metall (61) durch Verschmelzen aneinander gekoppelt sind.

10. Elektronische Vorrichtung nach einem der Ansprüche 1 bis 9, wobei:
das Seitenelement (13) ein äußeres Metall (A) umfasst,
der Trägerabschnitt (31) ein inneres Metall (C) umfasst, das das plattierte Metall (61) umfasst, und
das äußere Metall (A) und das innere Metall (C) durch Verschmelzen miteinander verbunden sind.

11. Elektronische Vorrichtung nach einem der Ansprüche 1 bis 10, wobei das mindestens eine elektronische Bauteil ein Anzeigemodul (201) umfasst, das sich zwischen dem Trägerabschnitt (31) und der vorderen Platte (11) befindet und durch die vordere Platte (11) visuell sichtbar ist.

## Revendications

1. Dispositif électronique (1) comprenant :
une plaque avant (11) conçue pour former au moins une partie d'une surface avant (10A) du dispositif électronique (1) ;
une plaque arrière (12) conçue pour former au moins une partie d'une surface arrière (10B) du dispositif électronique (1) ;
un élément latéral (13) conçu pour former au moins une partie d'une surface latérale (10C) du dispositif électronique (1) ;
une partie de support (31) située entre la plaque avant (11) et la plaque arrière (12), ladite partie de support (31) étant raccordée à l'élément latéral (13) et comprenant un métal plaqué (61) ;
au moins un composant électronique (342) situé entre la plaque avant (11) et la plaque arrière (12), et
au moins un conducteur de chaleur (71, 72) disposé entre l'au moins un composant électronique (342) et le métal plaqué (61) ;
ledit métal plaqué (61) comprenant une première couche métallique (611) et une seconde couche métallique (612), ladite première couche métallique (611) possédant une conductivité thermique plus élevée que la seconde couche métallique (612),
ladite seconde couche métallique (612) comprenant une ouverture (6121),
ledit au moins un conducteur de chaleur (71, 72) étant disposé entre l'au moins un composant électronique (342) et la première couche métallique (611) à travers l'ouverture (6121) de la seconde couche métallique (612) de sorte que la chaleur provenant du au moins un composant électronique (342) soit transférée à la première couche métallique (611) par l'intermédiaire dudit au moins un conducteur de chaleur (71, 72) ; et
ledit au moins un conducteur de chaleur (71, 72) possédant une conductivité thermique plus élevée que la seconde couche métallique (612).

2. Dispositif électronique de la revendication 1, le deuxième métal (612) possédant une plus grande résistance que le premier métal (611).

3. Dispositif électronique de l'une quelconque des revendications 1 à 2, ledit premier métal (611) comprenant du cuivre, et ledit deuxième métal (612) comprenant de l'acier inoxydable.

4. Dispositif électronique de l'une quelconque des revendications 1 à 3, ledit métal plaqué (61) comprenant en outre un troisième métal (613) agencé sur le premier métal (611), et
ledit premier métal (611) étant au moins partiellement disposé entre le deuxième métal (612) et le troisième métal (613).

5. Dispositif électronique de la revendication 4, ledit premier métal (611) possédant une conductivité thermique plus élevée que le deuxième métal (612) et le troisième métal (613), et/ou ledit deuxième métal (612) et ledit troisième métal (613) possédant une plus grande résistance que le premier métal (611).

6. Dispositif électronique de l'une quelconque des revendications 1 à 5, ledit élément latéral (13) comprenant une pluralité de trous (91-1, 91-2, ..., 91-N), et
ledit métal plaqué (61) comprenant une pluralité de saillies (92-1, 92-2, ..., 92-N) insérées dans la pluralité de trous (91-1, 91-2, ..., 91-N) pour raccorder la partie de support (31) au côté (13).

7. Dispositif électronique de l'une quelconque des revendications 1 à 6, comprenant en outre :
une carte de circuit imprimé (341) sur laquelle l'au moins un composant électronique (342) est disposé ; et
un blindage électromagnétique (830) disposé sur la carte de circuit imprimé (341) pour entourer au moins partiellement l'au moins un composant électronique (342),
ledit au moins un composant électronique (342) étant en contact direct ou indirect avec le métal plaqué (61) à travers une ouverture (8321) dans le blindage électromagnétique (830).

8. Dispositif électronique de la revendication 7, ledit blindage électromagnétique (830) étant raccordé thermiquement au métal plaqué (61).

9. Dispositif électronique de l'une quelconque des revendications 1 à 8 :
ledit élément latéral (13) comprenant une première partie métallique externe (A1) et une seconde partie métallique externe (A4) espacées l'une de l'autre ;
ledit dispositif électronique comprenant en outre une partie de support métallique (1000) raccordant la première partie métallique externe (A1) et la seconde partie métallique externe (A4),
ladite partie de support métallique (1000) étant conçue pour chevaucher le métal plaqué (61) de la partie de support lorsqu'elle est vue de dessus de la plaque avant (11), et
ladite partie de support métallique (1000) et ledit métal plaqué (61) étant couplés l'un à l'autre par fusion.

10. Dispositif électronique de l'une quelconque des revendications 1 à 9 :
ledit élément latéral (13) comprenant un métal externe (A),
ladite partie de support (31) comprenant un métal interne (C) comprenant le métal plaqué (61), et
ledit métal externe (A) et ledit métal interne (C) étant raccordés l'un à l'autre par fusion.

11. Dispositif électronique de l'une quelconque des revendications 1 à 10, ledit au moins un composant électronique comprenant un module d'affichage (201) situé entre la partie de support (31) et la plaque avant (11) et visible visuellement à travers la plaque avant (11).
